# EUROPEAN PATENT SPECIFICATION

(11) **EP 2 239 920 B1**
(45) Date of publication and mention of the grant of the patent: **07.08.2013**
(21) Application number: 09157778.3
(22) Date of filing: 09.04.2009
(51) Int. Cl.: H04L 29/06

(54) **Method, server and computer-readable medium for establishing a presence context within a presence platform**
Verfahren, Server und computerlesbares Medium zur Festlegung eines Präsenzkontextes innerhalb einer Präsenzplattform
Procédé, serveur et support d'enregistrement lisible par ordinateur pour établir un contexte de présence dans une plate-forme de présence

(43) Date of publication of application: 13.10.2010
(73) Proprietor: Research In Motion Limited, Waterloo, ON N2L 3W8 (CA)
(72) Inventor: McColgan, Brian, Mississauga, Ontario L4W 5M4 (CA); Martin-Cocher, Gaelle, Mississauga, Ontario L4W 5M4 (CA)
(74) Representative: Patel, Binesh

(56) References cited:
- WO-A-2004/034719
- US-A1- 2003 028 621
- US-A1- 2004 122 977
- MORAN H KHARTABIL E LEPPANEN NOKIA T: "Requirements for Presence Specific Event Notification Filtering; draft-ietf-simple-pres-filter-reqs-03.txt" IETF STANDARD-WORKING-DRAFT, INTERNET ENGINEERING TASK FORCE, IETF, CH, vol. simple, no. 3, 26 January 2004 (2004-01-26), XP015027638 ISSN: 0000-0004

## Description

### FIELD OF THE DISCLOSURE

The present disclosure relates to presence, location or other generic systems, and in particular to the context for target information required by a watcher.

### BACKGROUND

Applications possess functional utilities that have important characteristics known as context. Context is defined as "the set of information which surrounds, and gives meaning to something else." Examples of context can be found, for example, in presence applications, location applications, among others.

Current presence services provide horizontal platforms. In other words, current presence services provide the capture of presence information on behalf of presentities and watchers who tend to make use of many different presence capable services. Examples of such presence capable services include, but are not limited to, instant messaging, push-to-talk over cellular, among others.

Presence platforms generally support the notion or concept of a watcher client subscribing for a specific presentity. In other words, the watcher would subscribe to watch a particular entity or individual who makes available their status information. During the subscription process, some presence platforms also permit a watcher client to optionally narrow or specify a subset of presence information required. The watcher may also be provided with a capability to specify conditions under which a notification is sent to a watcher. Thus, for example, when utilizing an instant messaging application, when a watcher's friend becomes available and willing to chat, this could be provided as a notification to the watche.

US 2003/00.8621 describes an exemplary prior art presence server.

### SUMMARY

The present disclosure provides a method according to claim 1. The present invention further provides a computer-readable medium as defined in claim 10.

The present disclosure further provides a server according to claim 9.

### BRIEF DESCRIPTION OF THE DRAWINGS

The present disclosure will be better understood with reference to the drawings in which:
**Figure 1** is an example call flow diagram showing call flow establishing a subscription and receiving presence information for an instant messaging service;
**Figure 2** is a block diagram showing an example presence system in which a presence context aware mechanism has been added;
**Figure 3** is a block diagram showing an example presence system in which a presence context aware mechanism has been added and distributed between a server and agents;
**Figure 4** is a block diagram showing an example presence system in which a presence context aware mechanism has been added to a PoC server;
**Figure 5** is a block diagram showing an example presence system in which a presence context aware mechanism has been added to a Presence Platform;
**Figure 6** is a block diagram showing an example location system in which a location context aware mechanism has been added;
**Figure 7** is a block diagram showing an example generic system in which a generic context aware mechanism has been added;
**Figure 8** is an example call flow diagram showing call flow for policy setup;
**Figure 9** is an example call flow diagram showing call flow for aspects within an OMA/PRS environment;
**Figure 10** is an example call flow diagram showing call flow for aspect triggers;
**Figure 11** is an example call flow diagram showing call flow establishing a subscription and receiving presence information for an instant messaging service; and
**Figure 12** is an example simplified call flow for the call flow of **Figure 11****.**

>

### DETAILED DESCRIPTION

### Terms:

In the present description the following terms are used and defined as follows:
**IM** Instant Messaging is a communication service by which two or more
   peers can interchange short text messages with one another.
**Context** That which surrounds, and gives meaning to
   something else.
**OMA** Open Mobile Alliance
**PEEM** Policy Evaluation, Enforcement, and Management Enabler
**Presence Info** A basic unit of presence (e.g. activity or mood is
   presence information).
**Presence Source** Entity that relates presence info on behalf
   of 1+ presentities.
**Presentity** entity or individual which makes available their status information.
**Presence Aspect** a logical abstraction relating to one or more underlying
   presence information elements corresponding to a given
   presentity.
**Presence Context** a view resulting from a collection or grouping of relevant
   presence information elements, and possibly rules, policy type(s)/value(s),
   etc. based on criteria associated with a service/presentity/watcher (usually
   this criteria is provided by the SP).
**Presence Trigger** a trigger which invokes an action (i.e. a logical sequence of
   steps or processes) when a particular presence aspect is detected to have
   changed (e.g. send an asynchronous notification when Bob becomes willing
   to communicate).
**Presence Service** functional entity responsible for capturing state information
   of one or more Presentities and making them available to authorized watcher
   client(s).
**Watcher** - entity or individual interested in consuming the status of Presentity.
   The Watcher client is equal to the PAL client.
**Watcher grouping** a logical grouping of watcher entities and/or functionalities
   represented by a single watcher identifier.
**Context Aware Layer** A Layer that may be an access, application abstraction
   or proxy layer. This layer may make use of aspects. This layer may
   be deployed over a network and may be adapted to handle requests
   from a plurality of clients of various types. This layer may include
   context aware mechanisms such as, for example an x/CAM, which is
   a non-specific (generic) context aware mechanism, or specific
   mechanisms such as presence (p/CAM) and location (L/CAM).

### Description:

Current horizontal presence platforms are unable to permit a watcher or watcher grouping to associate applicable presence information with a particular service. For example, an instant messaging (IM) service may be utilized by a particular watcher and the service implies or associates specific presence contexts. For exemplary purposes, an IM service called "MyFriendlyChat" is used herein. In particular, a specific set of presence information and other information relevant to the calculation of presence is used to achieve functions on behalf of the "MyFriendlyChat" service.

Current presence platforms also do not provide a way in which a watcher or watcher grouping is able to initiate a subscription relative to a given service. Current subscriptions are only permitted for a given resource such as a presentity and hence there is a need to multiply the subscription to each resource within a given service. In other words, if watcher "Alice" wishes to watch a target "Bob" for the "MyFriendlyChat" service, restrictions can be set up when "Alice" is subscribing to watch "Bob". The restrictions will be required to be replicated when watcher "Alice" wants to watch "Beth" and for each subsequent presentity or target that watcher "Alice" wishes to watch. As will be appreciated by those in the art, PRS provides a convenience mechanism known as a Resource List Server, which allows watcher 'Alice' to refer to a list of 'buddies' (e.g. Bob and Beth as 'mySchooiFriends'). However, while there is a savings in message volume (i.e. subscription message exchange dialogues between watcher and Presence Server) any benefit is typically impacted by a heavier processing overhead (e.g. of a resource list meta-information)

The present disclosure provides, in one embodiment, a mechanism to establish a presence context based on a watcher and associated presence capable service.

In a further embodiment, it is possible that during the establishment of a presence context, the watcher may directly or indirectly subscribe to a presentity or a group of presentities on behalf of the watcher client. Such direct or indirect subscription may eliminate a need for a watcher client to submit separate presence subscriptions for each presentity. In other words, the establishment of a presence context and the corresponding presence information subscription or subscriptions may be completed using a single watcher client protocol message.

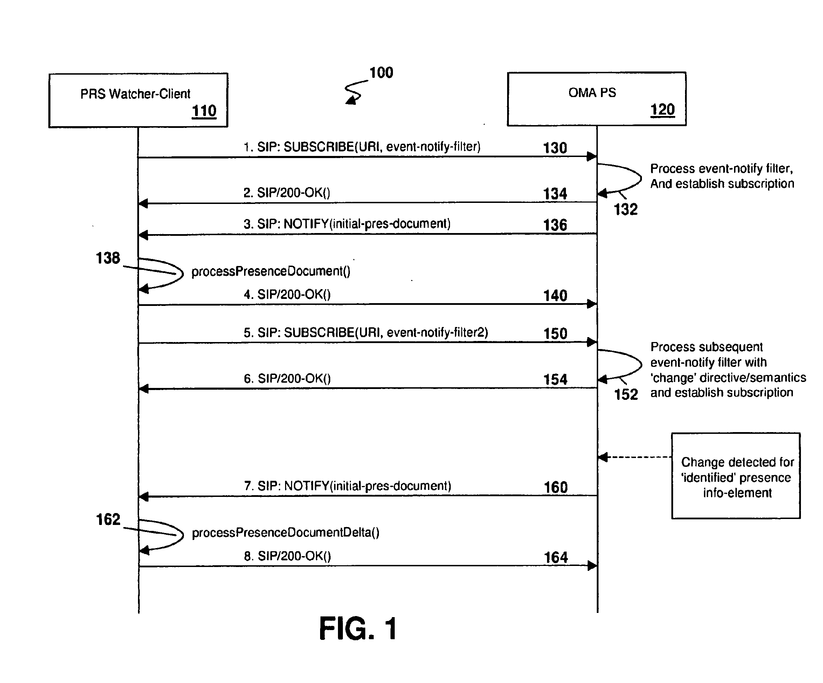

Reference is now made to **Figure 1. Figure 1** illustrates an example presence platform 100, which is an open mobile alliance (OMA) SIMPLE Presence Enabler. However, the present disclosure is not meant to be limited to the OMA SIMPLE Presence Enablers, and other platforms could equally be used.

The presence platform **100** provides the ability to capture presence state information for later distribution to authorized watcher clients **110** through a presence service **120.**

In order for a watcher client **110** to establish interest in a particular presentity or a collection of presentities, the watcher client 110 is configured to issue a SUBSCRIBE method using SIP (session initiation protocol) based on the Internet Engineering Task Force (IETF) request for consultation rfc3261 and rfc3265.

Referring to **Figure 1****,** the watcher client **110** sends a SIP:SUBSCRIBE (URI, event-notify-filter) message to the presence service **120.** This message contains two elements. The first is the uniform resource identifier for the presentity that the client wishes to subscribe to. The second, optional element, is the event-notify-filter which provides a filter for the presence service to filter the notifications to watcher client **110.** As will be appreciated by those skilled in the art, OMA SIMPLE Presence v.2.0 Enablers provide support for event notification filtering. This provides a mechanism by which a watcher may specify or narrow the presence information that is sent by a notifier such as a presence service **120.** Event notification filtering is accomplished through a watcher SUBSCRIBE method as detailed in IETF RFC4660. The SIP:SUBSCRIBE message is shown as arrow **130**.

The presence service **120** processes the event-notify-filter and establishes a subscription between the watcher and presentity, as shown at arrow **132.** If the processing is successful then a SIP/200-OK() message is sent back to watcher client **110,** as shown by arrow **134.**

The above is illustrated with reference to the following exemplary code. In the code below, the watcher-client **110** is for a watcher "Alice" and the presentity that "Alice" wishes to monitor is "Bob".

The presentity publishes baseline presence information towards presence service 120. This is illustrated as:

```
     <?xml version="1.0" encoding="UTF-8"?>
           <presence xmlns="urn:ietf:params:xml:ns:pidf"
                    xmins:op="urn:oma:xml:prs:pidf:oma-pres"
                      entity="sip:bob@example.com">
           <tuple id="a1232">
                <status>
                    <basic>closed</basic>
               </status>
               <op:willingness>
                     <op:basic>closed</op:basic>
               </op:willingness>
               <op:service-description>
                     <opaervice-id>MyFriendlyChat</opaervice-id>
                   <op:version>1.0</op:version>
              </opaervice-description>
             <contact>sip:bob@example.com</contact>
            <timestamp>2009-03-23T17:11:23Z</timestamp>
       </tuple>
      </presence>
.
```

As seen from the above XML, presence and name spaces are defined and a tuple with id "a1232" provides status, willingness, service-description, contact and timestamp information.

At some point in time, watcher client **110,** in this case "Alice" invokes her OMA presence version 2 enabled "MyFriendlyChat" client. This client makes a request for presence information for presentity "Bob" as seen by arrow **130.** The contents of the SIP:SUBCRIBE of arrow **130** is shown below with regard to exemplary XML:

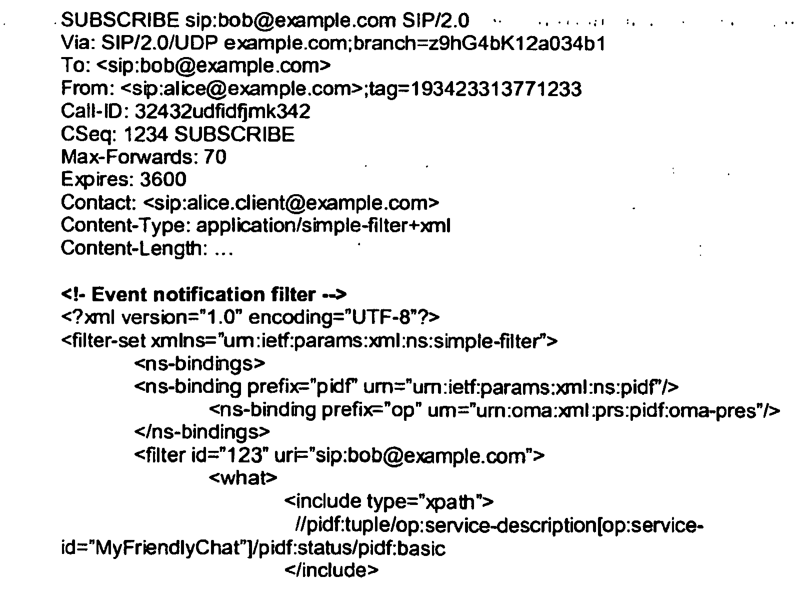

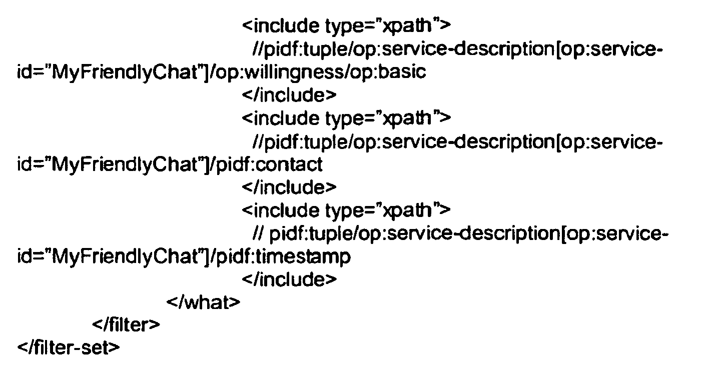

As seen from the above XML, the message sent and shown by arrow **130** of **Figure 1** includes subscription request indicating the presentity to whom the subscription is sought, information about the watcher client **110,** among other information. Further, an event notification is shown above in the XML indicating that the information required is "willingness", "status", contact information and time stamp.

The response received, shown by arrow **134** in **Figure 1** can be:

```
     SIP/2.0 200 OK
    Via: SIP/2.0/UDP example.com;branch=z9hG4bK12a034b1;received=192.0.23.44
     CSeq: 1234 SUBSCRIBE
     Call-ID: 32432udfidfjmk342
     From: <sip:bob@example.com>;tag=ffd2
     To: <sip:alice@example.com>;tag=193423313771233
     Contact: <sip:myfriendlychat@example.com>
    Content-Length: 0
```

As seen in the above message, the SIP/200-OK matches with the subscription request and indicates that the subscription is established between the presentity "Bob" and watcher "Alice".

Referring again to **Figure 1****,** at a subsequent point to the sending of the message shown by arrow **134,** a notification, shown by arrow **136,** is sent from the presence service 120 to watcher client **110.** The notification provides the initial presence document including information that may be filtered by the filter sent in the message as shown by arrow **130.**

The SIP:NOTIFY message of arrow **136** may have the following XML code associated with it:

```
     NOTIFY sip:alice.client@example.com SIP/2.0
     Via: SIP/2.0/UDP examp!e.com;branch=z9hG4bk12a034b2
     To: <sip:alice@example.com>;tag=193423313771233
    From: <sip:bob@example.com>;tag=ffd2
    Call-ID: 32432udfidfjmk342
    CSeq: 8987 NOTIFY
     Contact: <sip:myfriendlychat@example.com>
     Event: presence
     Subscription-State: active; expires=3580
    Max-Forwards: 70
    Content-Type: application/pidf+xml
    Content-Length: ...
    <!- Event notification filter applied -->
    <?xml version="1.0" encoding="UTF-8"?>
          <presence xmlns="urn:ietf:params:xml:ns:pidf"
              xmins:op="urn:oma:xml:prs:pidf:oma-pres"
               entity="sip:bob@example.com">
           <tuple id="a1232">
             <status>
                  <basic>closed</basic>
             </status>
             <op:willingness>
                  <op:basic>closed</op:basic>
             </op:willingness>
              <contact>sip:bob@example.com</contact>
             <timestamp>2009-03-23T17:11:23Z</timestamp>
         </tuple>
      </presence>
```

The above XML illustrates that the event notification filter is applied to presence information and the resulting notify provides the status, the willingness, the contact and the timestamp for a target presentity.

In **Figure 1****,** the watcher client **110** then processes the SIP:NOTIFY, as shown by arrow **138** and sends a SIP/200-OK(), shown by message **140.** An exemplary acknowledgment of message **140** is shown below:

```
     SIP/2.0 200 OK
     Via: SIP/2.0/UDP exmple.com;branch=z9hG4bK12a034b2
     CSeq: 8987 NOTIFY
     Call-ID: 32432udfidfjmk342
    From: <sip:bob@example.com>;tag=ffd2
    To: <sip:alice@example.com>;tag=193423313771233
    Content-Length: 0
```

In the embodiment of **Figure 1****,** watcher client **110** may subsequently initiate a further presence subscription in order to further specify that only changes in a specified set of elements are the basis for the notification to be reached by the watcher client **110** on behalf of a presentity.

Thus, the watcher client **110** sends a SIP:SUBSCRIBE message, as shown by arrow 150, to the presence service **120.** The SIP:SUBSCRIBE message includes an 'event-notify-filter2', which is a modified filter.

The SIP:SUBSCRIBE message of arrow **150** of **Figure 1** may include the following XML:

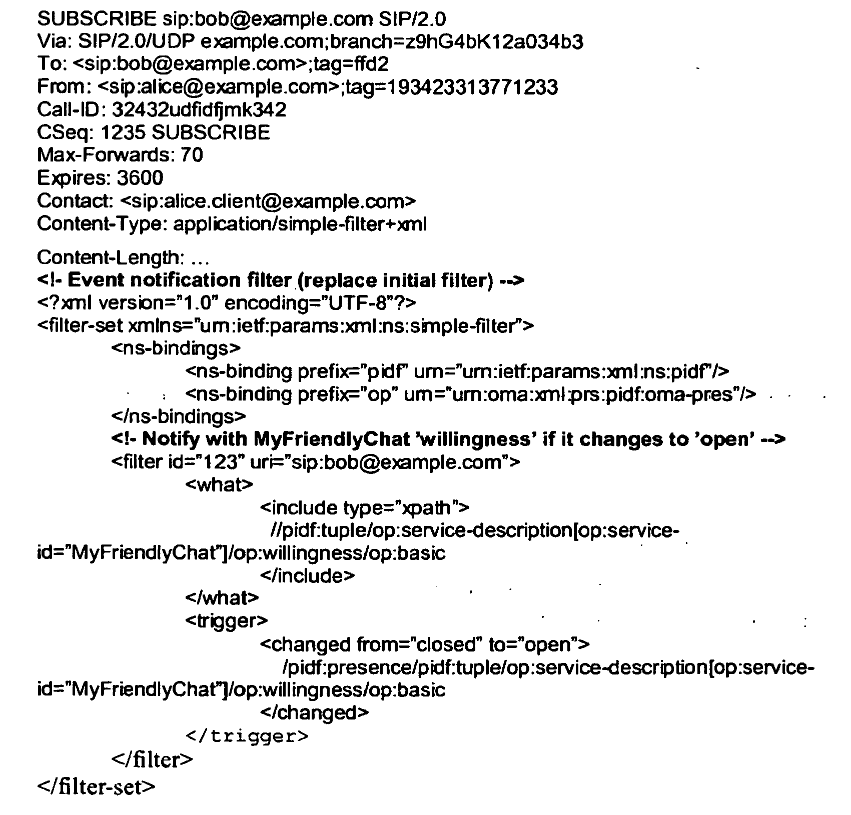

The filter is changed by the "MyFriendlyChat" service to indicate a trigger condition if willingness changes to "open". This is seen defined by the <trigger> which specifies that the trigger is invoked if the willingness is changed from closed to open.

In response to the message of arrow **150,** the presence service **120** processes the event notification filter with the "change" directives/semantics to and establishes the subscription, as shown by arrow **152.** An acknowledgment with the "SIP/200-OK()" is sent as shown by arrow **154.** The message of arrow **154** will be similar to the message provided above with reference to the message of arrow **140.**

Subsequently, a change is detected for the identified presence information element. In this case, the presentity may change willingness from "closed" to "open". In response, the presence service **120** sends a SIP:NOTIFY with an initial presence document. The initial presence document sent, as shown by arrow **160** is similar to the SIP:NOTIFY shown by arrow **136** and thus, a similar amount of information needs to be passed.

The watcher client **110** then processes the presence client delta, as shown by arrow 162, and if the processing is successful, sends a SIP/ 200-OK() shown by arrow **164.** Again, the SIP/200-OK() message shown by arrow **164** will be similar to the message provided above with reference to the message of arrow **134.**

**Figure 1** shows the complexity and the amount of data that needs to be transmitted back and forth between the watcher and the presence server in order to achieve even a very simple or rudimentary presence enabled service such as the "MyFriendlyChat" service.

In one embodiment, the complexity and amount of data transferred is reduced through the use of a presence access layer and the establishment of presence context for a service.

**Abstraction Layers**

The contextual interpretation of presence information may be embedded within each client application. Each client application can receive a different or the same set of presence metadata and in situations where multiple applicants share the same raw presence metadata, the fact that the contextual interpretation is individually tied to each of them increases the possibility that two different client applications will arrive at differing conclusions about a specific presence aspect. This may not provide the desired outcome and may lead to interoperability issues, particularly between client applications that share or treat specific presence aspects in an orthogonal and consistent manner.

For example, an email and an IM client that both derive a person's reachability from the same raw presence document may come to different conclusions as to whether someone is reachable based on subtle variations in each client application's presence processing steps. This may result in the email client concluding that the person is reachable while the IM client determines that the individual is unreachable. In addition to a bad quality of service, this could result in issues with interoperability such as not being able to spawn an IM chat session from an email client when reviewing an individual's email due to a state mismatch error. In a further example, Alice has two IM clients on her mobile device (MyFriendlyChat, and SimpleChat). Both of these are based on OMA Instant Message enabler and therefore, share the same raw presence information. However, MyFriendlyChat has a different way of computing willingness from SimpleChat. That is SimpleChat, does not take into account 'overriding-willingness' for the IM service tuple, and therefore the conclusions of the services regarding 'willingness' may not always be the same (depending on what a Presentity publishes). Thus two client applications can (and will) reach differing conclusions regarding an underlying aspect

Abstracting raw presence information into a dedicated context aware layer which supports "presence aspects" based on contextual rules and policies allows for the possibility of applications to work collaboratively to achieve derived functionality and to carry out intelligent workflows as a result of a compound context presence. For example, a project manager wishes to host a project status meeting. The project manager establishes a meeting invitation (e.g., from an enterprise email/calendaring application) on her desktop execution environment to meeting participants. A presence-context platform working on behalf of the mail/calendaring application may be able to support the following types of functions as a result of the user initiating the invite:
- Determine an appropriate time based on participant availability;
- Based on contextual policy, book an appropriate meeting room for the meeting;
- Determine based on participant location (and enterprise policy) whether a conference bridge must be booked (and reflect this to appropriate individuals in the meeting request);
- Based on hints or policy given by the meeting moderator through the application, invite relevant participants who fulfill a given criteria (e.g. a member of the marketing team, a member of the development team, a member of the quality assurance (QA) team, an individual with a specific skill or knowledge, etc.).

Further, various application servers can integrate the presence context aware mechanism (P/CAM) to gain efficiency by reducing the number of communication and processing steps. For example, a mobile advertisement server could integrate with a P/CAM to simplify and streamline its presence aspects to focus on core functionality such as the delivery of contextually relevant mobile advertisements.

Context awareness resides in whole or in part within the network and provides a composite view of presence/location or other related aspects to an application or multiple applications on behalf of various entities such as a given presentity and/or watcher in the presence case. For each case, this is achieved by associating rules, triggers, and policies against presence related aspects such as availability, contactability, reachability, state, among others, into a context aware layer. Rules or triggers may be extended or overridden to provide additional or application specific behavior to different classes of applications or enablers.

Context awareness may be replicated to a presence or location context aware mechanism connected with a presence or location service platform to provide a client application or a service with location related aspects. A location context aware mechanism (L/CAM ) makes use of location information provided by a location enabler, location information stored in a presence service or other location information store. For example, the location could be derived using GPS, base station, or extended cell tower information.

Location specific rules and policies are associated against location related aspects such as within a geographical area, who is close by, am I there yet, among others, into a location context aware layer. As with a P/CAM, rules or triggers may be extended or overridden to provide additional/application specific behavior to different classes of applications or service enablers.

Similarly, a "generic" context aware layer (context aware mechanism) could contain a combination of a P/CAM, L/CAM and specific application context aware mechanism. An example could be a mobile advertising platform where presence, location and campaign related information are used in combination to target advertisements of interest towards a user. Other generic platforms could include a network address book service, a network community service, among others.

As will be appreciated by those skilled in the art, a context aware mechanism is applicable to both a wired and wireless execution environment and computing domain. This approach has several benefits including a dramatic reduction in the complexity of an associated application running within a user's execution environment. A contextually aware platform located on the network permits a given client application or enabler to focus on its core competency such as chat within an IM client, visualizing a person's location in a location client, among others. Functionality is achieved by injecting (e.g., at execution time) the applicable policies and by invoking specific rules and/or triggers relevant to the context of the client application or the enabler to provide utility on behalf of the user.

In a further embodiment, a context aware platform or context aware layer includes both an x/CAM server and an x/CAM client or agent that work in concert. Further, in some embodiments of the x/CAM, the same distributed or non-distributed aspects as the P/CAM and L/CAM mentioned above are possible. For instance, the context aware layer may exist only on the server side in some embodiments. The context aware layer client or agent is embedded within an execution environment. The interface to a context aware platform may be web-centric. Examples include extensible markup language (XML) web services such as simple object access protocol (SOAP), representational state transfer (REST) or XML over hypertext transfer protocol (HTTP). The above supports a context aware layer deployment scenario whereby an application or enabler could directly interact or manipulate the context aware mechanism to more closely model the appropriate behavior. For example, a mobile advertising server co-located with a P/CAM agent could be used to override presence policies to better align presence with the underlying functionality of the platform. For example, a mobile advertising server can integrate or make use of an x/CAM 'layer'. Such x/CAM could be a superset of a P/CAM, L/CAM and specific advertisement /CAM.

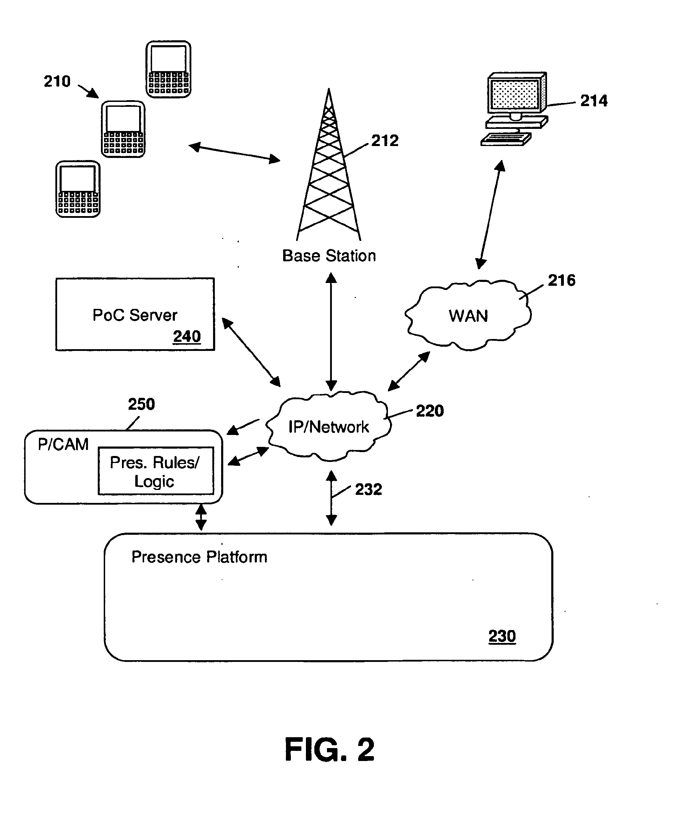

Reference is now made to **Figure 2. Figure 2** illustrates a system diagram for a presence platform with a PoC client application utilizing a P/CAM as the context aware layer.

In **Figure 2****,** user devices **210** communicate through a base station **212** to a network 220. Further, a desktop **214** (e.g., a computing device that is similar or different than user devices **210)** communicates through a wide area network **216** with network **220.**

A presence platform **230** is adapted to store raw data and state updates that have been received from clients.

Further, a PoC server **240** exists and is adapted to publish or consume state information on behalf of users.

A presence context aware mechanism server **250** provides the context aware layer and communicates with network **220** and receives policies, dynamic rules and/or triggers from clients over network **220** and further publishes and receives presence aspects through network **220.**

A presence context aware mechanism server **250** further communicates with presence platform **230** to provide and receive presence information flow.

**Figure 2** further illustrates a link **232** between network **220** and presence platform **230.** As will be appreciated, this link **232** may not be omitted despite the communication link between presence platform **230** and P/CAM server **250** in order to allow clients who want to communicate directly with the present platform the ability to do so or to provide for communications with the platform for new information or advanced information that the P/CAM server **250** may not yet be aware of.

Based on the above, P/CAM server **250** receives policies, rules and triggers and is adapted to provide and receive presence aspects based on these rules and logic to clients such as devices **210** or desktop **214,** or PoC server **240.**

As will be appreciated, in other embodiments, various aspects or functionality of the P/CAM can be distributed throughout the network and in some instances the entire P/CAM can be placed onto other devices or clients within the network.

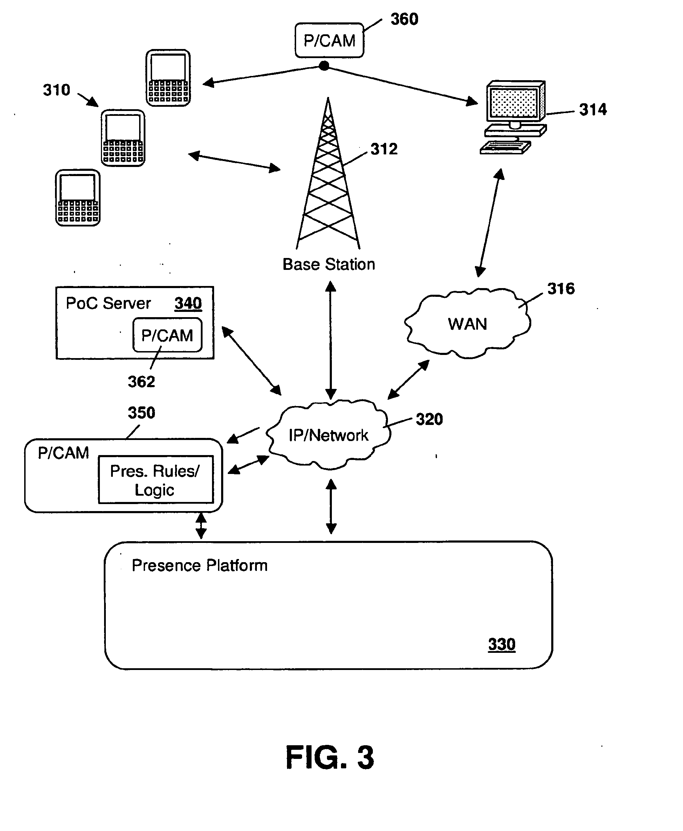

Reference is now made to **Figure 3. Figure 3** shows a system similar to that of **Figure 2****,** but in which the P/CAM functionality has been distributed through P/CAM agents on various devices.

Specifically, user devices **310** communicate through a base station **312** with network 320. Further, a desktop **314** (e.g., a computing device that is similar or different than user devices **310)** communicates over a wide area network **316** with network **320.**

A presence platform **330** is adapted to store raw data and state updates that are received from clients.

Further, a PoC server **340** is adapted to communicate with network **320** and publish or consume data on behalf of client applications.

The context aware layer embodied as a P/CAM server **350** is adapted to communicate with network **320** and to receive policy, rules and thresholds and provide and receive presence aspects to and from clients such as user devices **310** and desktop **314** through P/CAM agent **360** or PoC server **340** through P/CAM agent **362.**

P/CAM **350** is further adapted to communicate with presence platform **330** to receive and send presence information flow.

In the embodiment of **Figure 3****,** some of the functionality of P/CAM server **350** may be distributed in order to allow the full functionality of the P/CAM, or part of it, to be performed on the device **310,** desktop **314** or PoC server **340,** for example. This is illustrated by P/CAM agent **360** on user devices **310** or desktop **314** and P/CAM agent **362** on PoC server **340.** In this case, the context aware layer comprises both P/CAM server **350** and P/CAM agent **360** and/or **362.**

P/CAM agent **360** or **362** could contain rules and/or policies that are predefined. Further, the P/CAM agent **360** or **362** can be used to manipulate presence information or interoperate with metadata or clients on the host execution environment in some embodiments.

As will be appreciated, in some embodiments the entire P/CAM can be located on a client or other server.

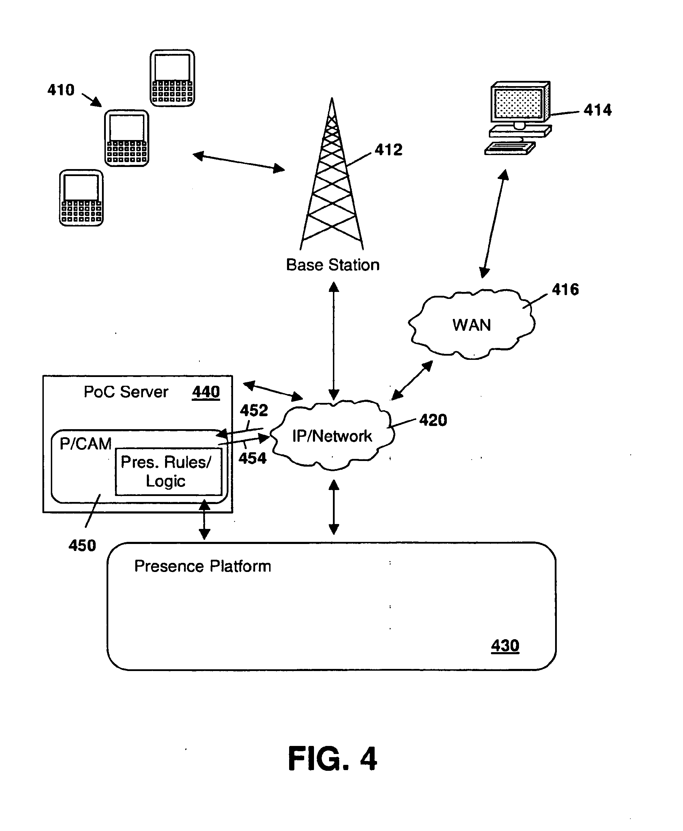

Reference is now made to **Figure 4. Figure 4** illustrates a system diagram in which the P/CAM server (context aware layer) is embedded within the PoC server.

Specifically, in **Figure 4****,** user devices **410** communicate through base station **412** with a network **420.** Further, desktop **414** (e.g., a computing device that is similar or different than user devices **410)** communicates over a wide area network **416** and to network **420.**

A presence platform **430** is adapted to store raw data and updates received from clients regarding presence.

A PoC server **440** is adapted to communicate with network **420** and to publish or consume state on behalf of clients.

PoC server **440** further includes P/CAM **450** embedded therein. P/CAM **450** communicates with presence platform **430** to exchange presence information flow and further communicates over network **420** to receive policy information, rules and thresholds and to further receive and publish presence aspects. Specifically, communications **452** provide P/CAM **450** with policy and dynamic overloaded rules, whereas communications **454** provide network **420** with presence aspects.

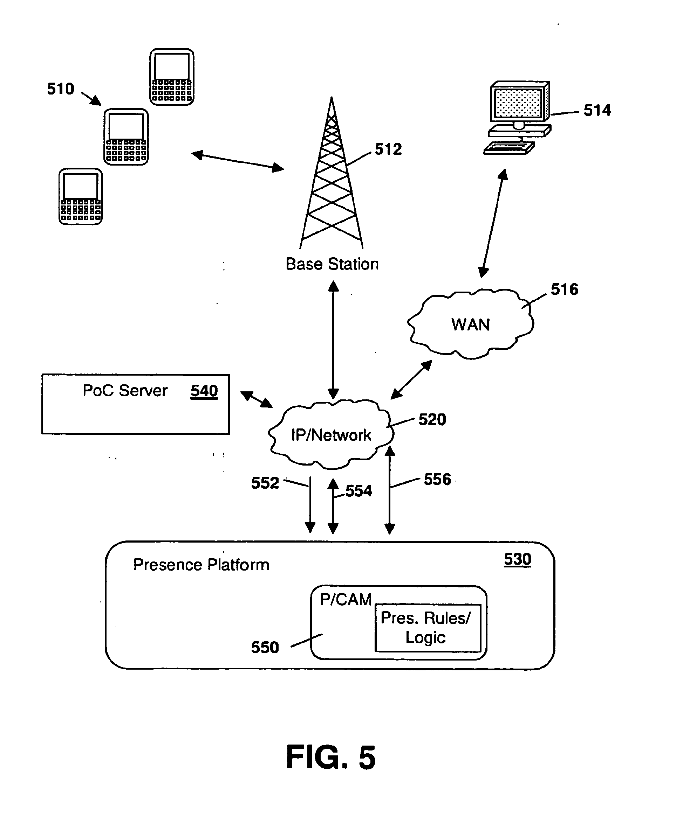

Further, an implementation could be defined as a P/CAM layer integrated within an enabler, e.g.: as part of the Presence Platform itself. The latter implementation, as illustrated in **Figure 5****,** could also support a variation whereby a context aware layer embodied as a P/CAM client/agent resides on the mobile device and/or as part of an associated enabler (e.g. a MobAd server), as illustrated in **Figure 4****.**

Reference is now made to **Figure 5. Figure 5** illustrates a system diagram in which the P/CAM server is embedded within the presence platform **530.**

Specifically, in **Figure 5****,** user devices **510** communicate through base station **512** with a network **520.** Further, desktop **514** (e.g., a computing device that is similar or different than user devices **510)** communicates over a wide area network **516** with network **520.**

A presence platform **530** is adapted to store raw data and updates received from clients regarding presence.

A PoC server **540** is adapted to communicate with network **520** and to publish or consume state on behalf of clients.

Presence platform **530** further includes P/CAM **550** embedded therein. P/CAM **550** communicates with presence platform **530** to exchange presence information flow and further communicates over network **520** to receive policy information, rules and thresholds and to further receive and publish presence aspects. Communication **552** shows policy/dynamic overloaded rules being received from network **520.** Communication **554** shows presence aspects being sent and received between presence platform **530** and network **520.** Communication **556** shows presence information flow between presence platform **530** and network **520.**

As will be appreciated with reference to **Figures 2****,** **3****,** **4** and **5****,** context awareness reduces network latency by reducing the amount of data transmitted between a user's execution environment and a presence platform. This is helpful in a wireless domain where CPU usage, battery consumption and network bandwidth are precious resources. Further, given a context abstracts the specific details of a presence platform, a client application or enabler is less brittle and significantly more resistant to underlying changes in the model or semantics of the presence platform.

As will be appreciated, **Figures 2****,** **3****,** **4** and **5** described above are provided with reference to a P/CAM. However, example systems and methods herein could equally be applicable with a location platform and a L/CAM or a generic platform and an x/CAM. Further, a combination of these platforms is possible. The P/CAM, L/CAM, x/CAM or combination form the context aware layer.

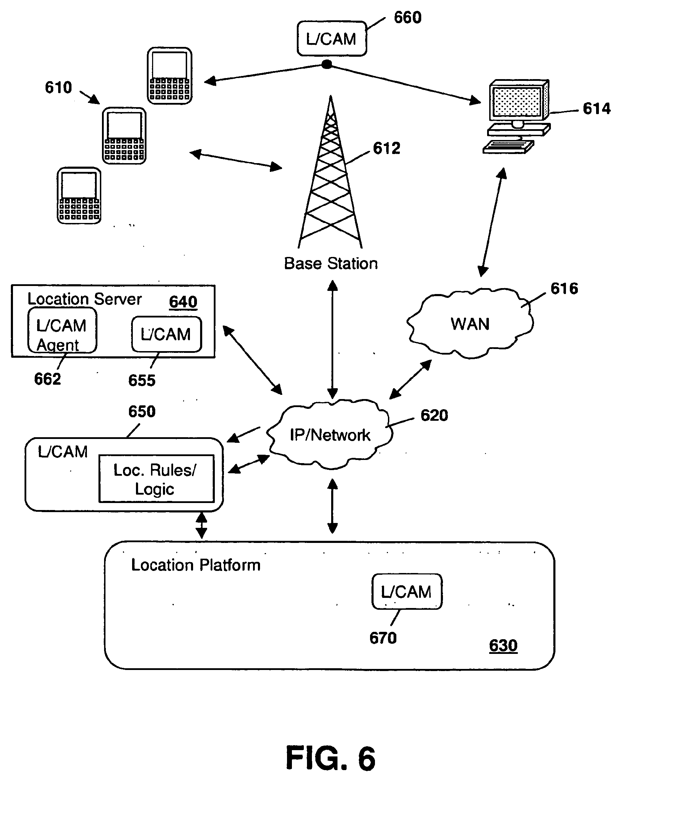

With reference to **Figure 6****,** user devices **610** communicate through a base station **612** with a network **620.** Further, a desktop **614** can communicate through a wide area network **616** with network **620.** A location platform **630** is adapted to provide and store raw data regarding the location of user devices **610** and further to receive updates from user devices **610** and store this information.

A location server **640** is further adapted to communicate with a network **620** and can provide the location of various clients.

An L/CAM **650** could be a stand alone server communicating with a network **620** and with location platform **630.** In an alternative embodiment the L/CAM server can be co-located on the location server as illustrated by reference numeral **655.** In further embodiments, L/CAM agents can be located on devices such as agent **660** on user devices **610** or on the location server such as agent **662.** In the case that agents **660** and **662** are used, various functionalities or all of the functionality of the L/CAM can be distributed to the user devices or the location server.

In further embodiments, the L/CAM can be part of the location platform **630,** as shown by L/CAM **670.**

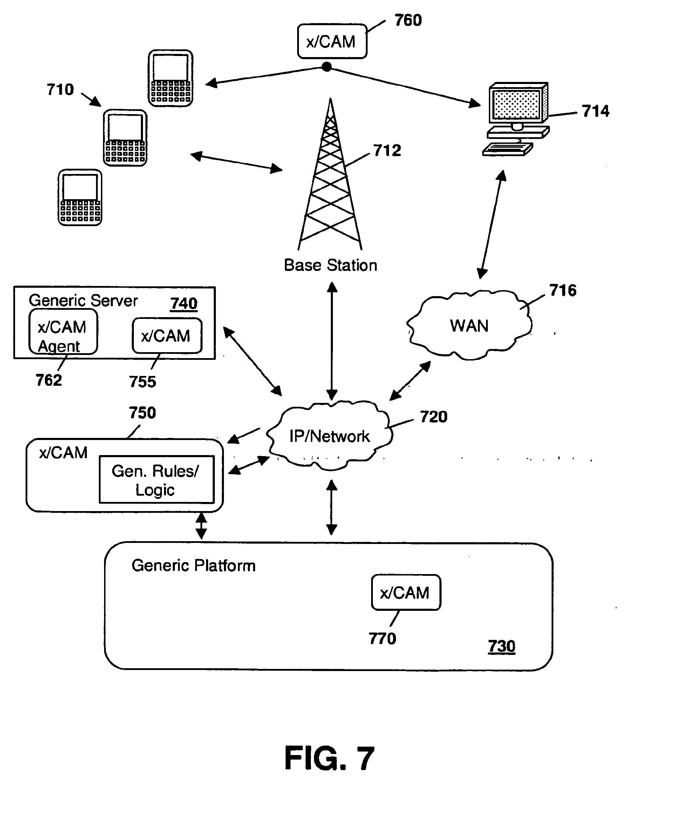

Referring to **Figure 7****,** a generic environment is provided. In **Figure 7****,** user devices **710** communicate through a base station **712** with a network **720.** Further, a desktop **714** (e.g., a computing device that is similar or different than user devices **710)** communicates through a wide area network **716** with network **720.** Also, a generic platform **730** is adapted to store data and states for various devices. Other servers such as a generic server **740** can exist within the network and can communicate over network **720.**

Further, a generic x/CAM **750** is adapted to communicate with network **720** and with generic platform **730.** In other embodiments, the x/CAM can be located on server **740** and this is shown as x/CAM **755.**

In yet further embodiments, the x/CAM can have agents **760** or **762** that are located on user devices **710** or on server **740** respectively.

In further embodiments, the x/CAM can be part of the generic platform **730,** as shown by x/CAM **770.**

**Figure 7** illustrates how a platform, whether it be presence, location, generic or a combination of the previous may be abstracted to a context aware layer using context aware mechanisms or layers to support a multiplicity of application types or enablers.

The above may be implemented utilizing policies and rules/triggers. A process relating to this mechanism is provided below.

In accordance with one embodiment, a context or mechanism, whether it is presence, location or generic, may include one or more of policies, aspects, rules and triggers. Each is described in detail below. The description below has been presented with reference to a presence context or mechanism. This is, however, not meant to be limiting and those skilled in the art would appreciate that the below could be equally applicable to location or generic context or mechanisms.

**Policy:**

Policy is associated with a particular presence context at an appropriate point in the application life cycle, to specify the behavior or treatment of presence, location or generic related aspects. Policies augment rules/logic flows in terms of how they operate, to provide a more accurate and meaningful computation of aspects on behalf of a client application or enabler. As will be appreciated, a policy can apply to a class of applications, an individual application or even to a user and can be provisioned with settings on how aspects are computed.

Policy may be expressed using the Open Mobile Alliance's (OMA) policy evaluation, enforcement and management (PEEM) / policy expression language (PEL). PEL defines a generic and extensible grammar in which policies may be expressed using a rule set language. PEL is based on Internet Engineering Task Force (IETF) request for comments (rfc) 4745. Conditions and/or actions (as specified in rfc 4745) may be enhanced within the scope of PEEM, through the OMA XDM (XML Document Management) common policy extensions, as detailed in OMA-SUP-XSD_XSD_xdm_extensions-V1_0. The policy can also be expressed on IETF rfc 4745.

As will be appreciated, PEEM is a continuing standards effort by the OMA to define common functions needed by its enablers.

As an example, the following table describes relevant presence policies for use by a presence context in the computation of presence aspects. These policies have applicability to the OMA presence platform. However, given policies may be added or removed from the given context as required and the concept is applicable to a multiplicity of presence platforms. In the table below, the default value, if applicable, is shown in italics.

**TABLE 1: Presence Policies**

| **Policy** | **Description** | **Values** |
|---|---|---|
| **opt-in-source** | Indicate which pres. element is an indicator of service opt-in. Default value indicates opt-in not relevant for the given comm. service. | willing I ***ignore*** |
| **applicable-networ-type** | Indicate the applicable network type(s) for the given comm. service. | ***IMS**,* SIP, <token>,... |
| **threshold-value-equals** | Establish an equality comparison operation threshold named label, with qn-elem, and value. A boolean value of 'true' or '1' or 'yes' would apply if the policy was applied to the xml-ns and the resulting target matched value. | <label> <qn-elem> <value> |
| **threshold-value-less-than** | Identical to equality, with the **exception that the comparison** operator is less than (<). | <label> <qn-elem> <value> |
| **threshold-value-greater-than** | Identical to equality, with the exception that the comparison operator is greater than (>). | <label> <qn-elem> <value> |
| **unavailable-activies-set** | Indicate the subset of activities from the watcher perspective that would render a contact unavailable. This set may be defined as empty which is an indication that activities has no bearing on availability. | busy, holiday, meal, in-transit, permanent-absence, sleeping, ***unknown**,* worship |
| **undef-servcaps-sub-elements** | Indicate how to interpret the absence or omission of specific <servcaps> sub-elements in presence metadata. | ***unknown*** \| unsupported |
| **undef-barring-state** | Indicate how to interpret the absence or omission of <barring-state> sub-elements in presence metadata. | ***ignore*** \| active \| terminated |
| **undef-registration-state** | Indicate how to interpret the absence or omission of <registration-state> sub-element in presence metadata. | ***ignores***\| active \| terminated |
| **undef-willingness** | Indicate how to interpret the absence or omission of <willingness> for the given comm. service. | (open, indefinite) \| (***closed,indefinite***) \| (open,time-ofs-value) \| (closed,time-ofs-value) |

**Table 1** above defines various policies and values for the policies. As indicated in the table, various policies exist and the description of the policy and the values are provided.

In the first row of the table, a first policy is "opt-in-source". The policy is used to indicate which presence element is an indicator of service opt-in. The default value indicates that opt-in is not relevant for the given communication service.

The values that are possible for the opt-in-source policy are willing, or ignore. As will be appreciated, these could be selected by various entities such as the service provider, among others. The entity choosing the policy can choose which values to utilize. Thus, for example, the service provider could choose to ignore opt-in source for the first policy.

The second policy described in **Table 1** is applicable-network-type and indicates the applicable network types for a given communication service. A default, as shown, is IMS. However, other values include session initiation protocol (SIP) or a token and can be chosen by the selecting entity.

The third policy is "threshold-value-equals" and could be utilized to establish an equality comparison operation threshold named label with a qualified name XML element and value. A boolean value of one or true or yes would apply if the policy was applied in the XML name space and the resulting target matched the value.

The next policy in **Table 1** is "threshold-value-less-than". This is similar to the threshold-value-equals policy except that it utilizes the less-than comparator.

Similarly, the next policy is "threshold-value-greater-than" which is similar to the above-mentioned threshold-value policies, except with the greater-than operator.

The next policy is "unavailable-activities-set" and could include a subset of activities that would render the contact unavailable in the context of the application, service or enabler. In the default setting this is unknown, but it could include things like busy, holiday, meal, among others.

The next policy is "undef-servcaps-sub-elements" and indicates undefined service capabilities and how the application is to interpret these. For example, **Table 1** indicates that if the service capability is undefined it could be considered to be unsupported.

The next policy in **Table 1** is "un-def-barring-state" and indicates how to interpret the absence or omission of a barring-state XML element in presence metadata and could include that the state is active or terminated. The default is that the state will be ignored.

Similarly, an "undef-registration-state" indicates how to interpret the absence or omission of a registration-state XML element and is by default ignored but could also be active and terminated in the example of **Table 1** above.

The final policy defined in **Table 1** above is "undef-willingness" and indicates how to interpret the absence or omission of a willingness XML element for a given communications service and could include a pair consisting of a state (open, or closed) along with a validity period (either an indefinite period or a preset validity period).

As will be appreciated by those skilled in the art, **Table 1** above is merely meant as an example and other policies are possible based on the needs of a system or user.

To support the policies in the preceding table, the P/CAM requires additional XML types and element definitions in order to extend the PEL common-policy "actions". The following XML schema document provides further details relating to how these actions may be extended for use by a P/CAM.

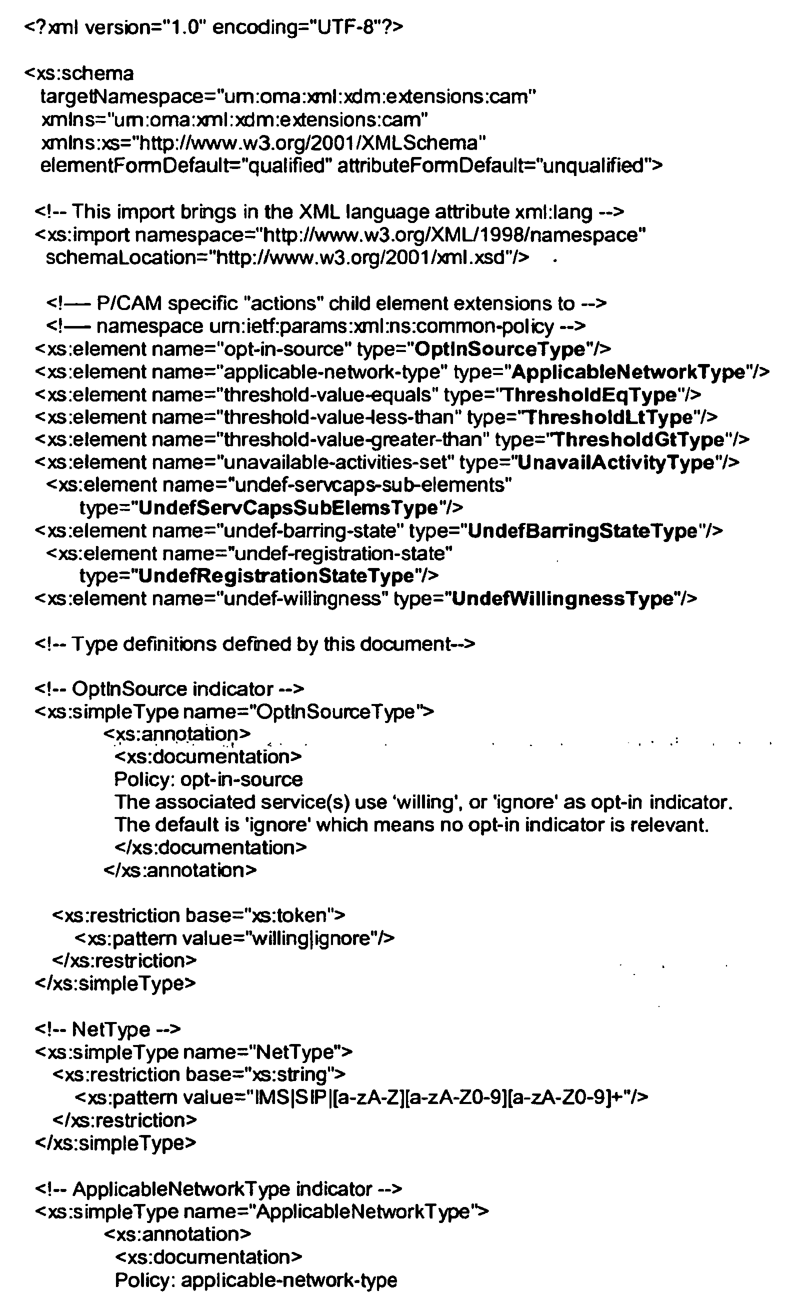

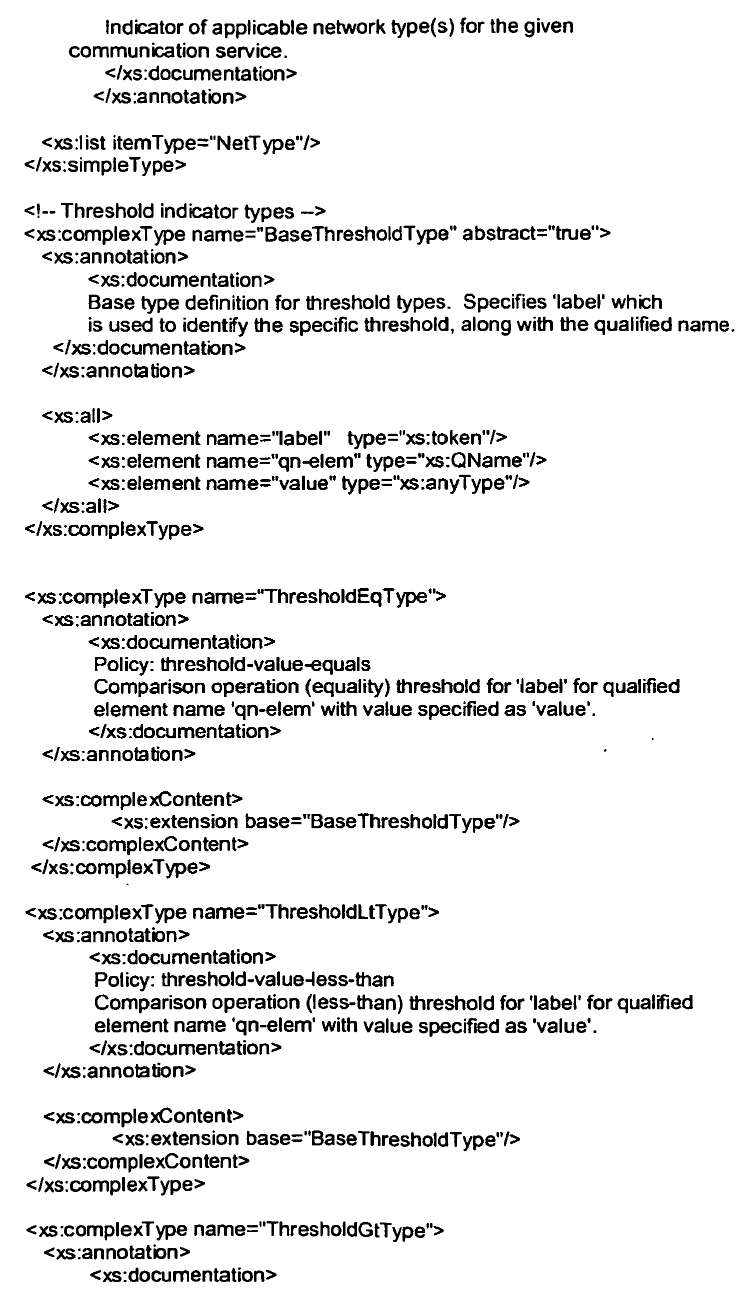

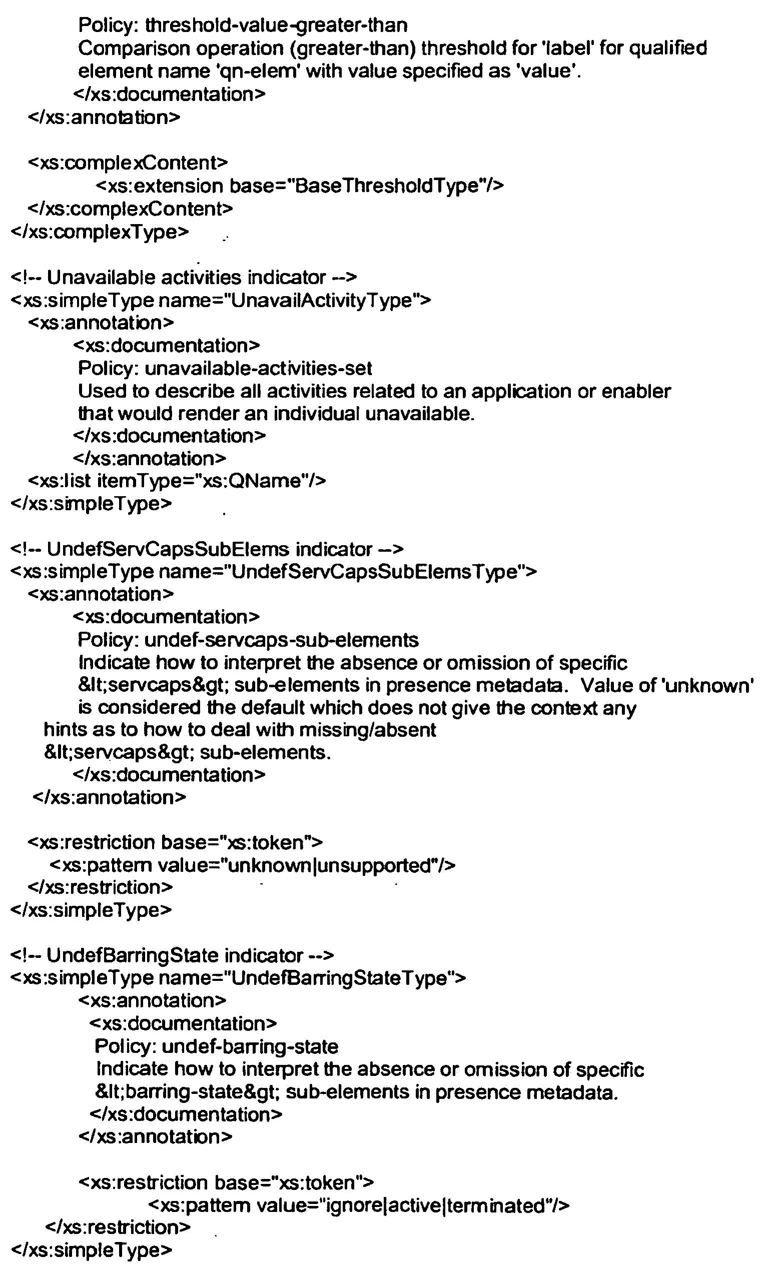

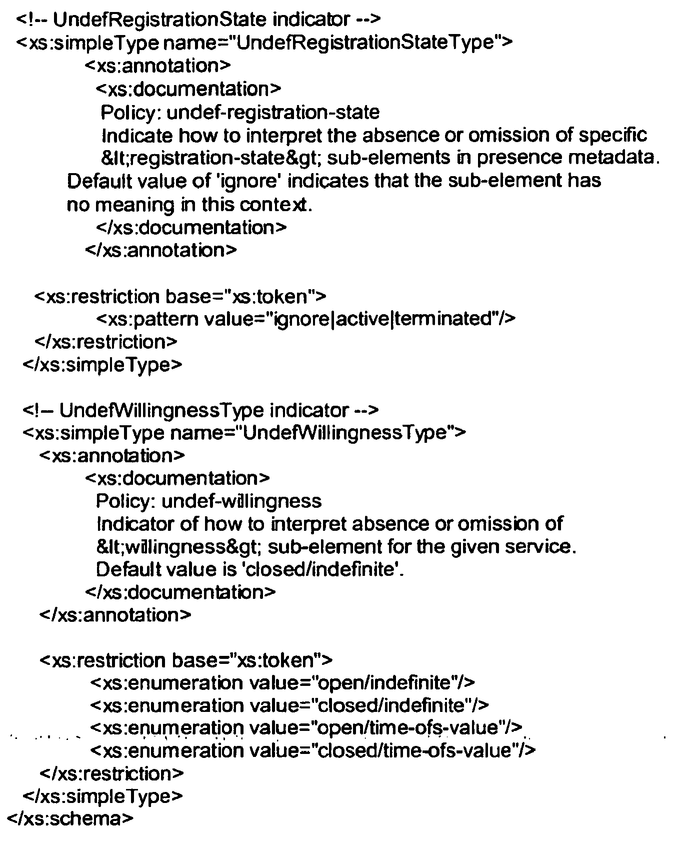

The above XML schema provides for the definition of element name in the lines that begin <xs:element name="opt-in-source" type="**OptinSourceType**"/>. The element names are further defined for the remaining policies in **Table 1** above.

As will be seen by those skilled in the art, the remainder of the XML Schema above defines the policy types as indicated by the description and value fields in **Table 1.** Specifically, for the "OptInSourceType" a xs:pattern value is set to willing or ignore. The above therefore provides the additional XML type and element definitions in order to extend PEL common policy actions.

By extending common policy actions, P/CAM policies may be incorporated into a common policy PEL 'ruleset' XML document. A 'ruleset' may apply at a user scope or a global scope. For example, the 'ruleset' may apply to a class of service or a specific application. The ruleset may also apply to an individual user or group of users.

P/CAM related policies are manipulated and evaluated through the various PEEM requestor interfaces by the P/CAM server itself or a P/CAM enabled client/agent. That is, application or authentication protocols may provide specific metadata such as the requestor identity to the PEEM requestor interface along with other metadata available to the PEEM servers as the basis for applying rules.

The following is an example of a common policy PEL rule set XML document, which consists of a single rule 'a101'. This rule associates with a service enabler such as a PoC alert and defines specific policy settings/values be applied as a result of a match for a target resource. In this case the target resource is the service identifier itself. As will be appreciated by those skilled in the art, this example makes an intentional correlation between the value of the common policy extension 'ext:service[@enabler]' attribute and the OMA PoC alert service-id as defined by OMA presence.

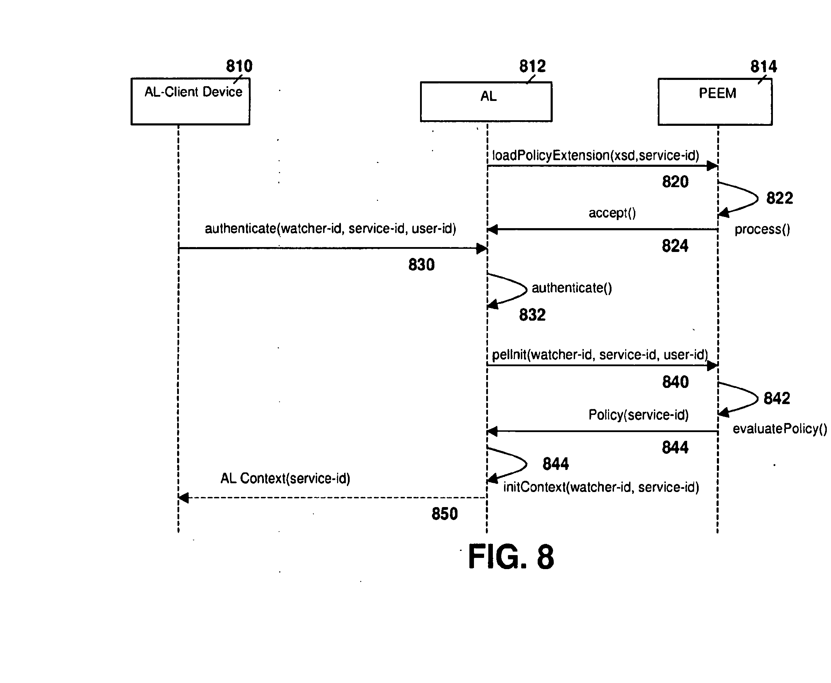

The above is illustrated with reference to **Figure 8****,** which shows how a aware layer (AL) such as a context aware layer (CAL), for example, can preload a given set of policy-type XSD. As will be appreciated, these are types as shown by **Table 1** above.

An AL-client device **810** communicates with a AL **812,** which communicates with a PEEM **814.**

AL **812** sends a loadPolicyExtension( xsd,service-id) message **820** to PEEM **814** which is processed, as shown by arrow **822.** PEEM **814** then sends an accept message **824** to AL **812.**

At some later point the AL-enabled client device **810** attempts to initiate and authenticate with an AL **812** service enabler such as a PoC alert service. This is done with the authenticate (watcher-id, service-id, user-id) message **830.**

As part of the initiation and authentication the AL **812** sends a pellnit (watcher-id, service-id, user-id) message **840** to PEEM **814.** PEEM **814** evaluates the policy as shown by arrow **842** and returns the policy in message **844.** Evaluation **842** allows the PEEM to apply a specific set of policy settings on a per server or per user basis.

AL **812** initiates the context arrow **844** and further optionally returns the AL context as message **850** back to AL client device **810.** Additionally, AL **812** may resolve a policy via the PEEM (based on who the user is and the service), However, it is ultimately the AL 812 that establishes context on behalf of the AL-client **810.**

It is possible that, as an example, the match criteria could be the service-id relating to an OMA enabler (such as PoC alert). Other match criteria could be based on a user or a group sphere.

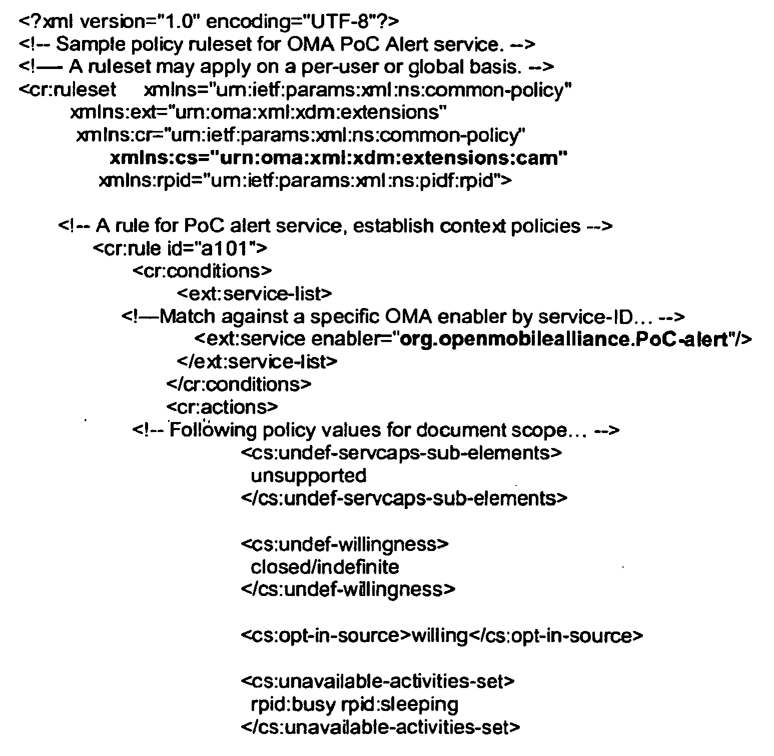

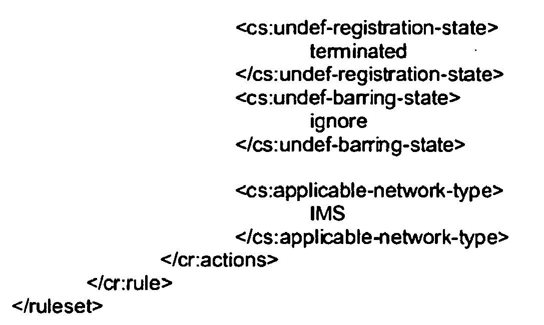

As will be appreciated by those skilled in the art, the above defines rule 'a101'. In this case the service-id is defined as "org.openmobilealliance.PoC-alert" the OMA PoC Alert service, and the P/CAM policy extensions are defined as part of the XML namespace "urn:oma:xml:xdm:extensions:cam". The above is therefore a manifestation of the schema defined with regard to **Table 1** above. The context aware layer values based on rule `a101' firing are shown below with reference to Table 1A.

**TABLE 1A- Policy Setting/Values (OMA PoC Alert Service)**

| **Policy** | **Value** |
|---|---|
| **opt-in-source** | willing |
| **applicable-network-type** | *IMS* |
| **unavailable-activies-set** | rpid:busy rpid:sleeping |
| **undef-servcaps-sub-elements** | unsupported |
| **undef-barring-state** | *ignore* |
| **undef-registration-state** | terminated |
| **undef-willingness** | (*closed,indefinite*) |

As will be appreciated, the PEEM could utilize multiple application policies and multiple services or exclusions could be established as part of a ruleset.

The actions as seen in the XML above define specific policy values for document scope.

**Aspects:**

Aspects are application level abstractions relevant to a source, for example, presence aspects are application level abstractions relevant to presence. Presence aspects can be considered the conceptual interface of a presence context to a P/CAM client application or enabler. **Table 2** below outlines a base set of applicable presence aspects that may be incorporated for use by a presence context aware mechanism and exposed to client applications. For each presence aspect, a description is provided, along with the associations the aspect relates to in terms of the standard presence data model outlined in IETF rfc 4479.

In particular, to specify and apply contextually relevant behavior across a disparate set of interworking components and user devices, a general mechanism is required for the encapsulation of aspects related to a presence platform. That is, an aspect captures a first-order abstraction related to a given application or enabler. Aspects relating to a presence platform would describe or relate to underlying indications of presence. Aspects may be expanded to encapsulate other indications as well. For example, location may be incorporated (or inferred) to derive or compute an associated aspect within a presence platform. This is illustrated in **Table 2** below with regard to the who-is-nearby aspect.

The present disclosure provides a mechanism for an arbitrary number of aspects as required by the presence platform. These may include common aspects such as availability and reachability. They may also include application specific aspects. A mechanism within the presence platform or management interface exists to associate an appropriate set of aspects with a given service. Association of aspects of contextual in nature and may apply at different levels. For example, a given aspect may apply to a service enabler such as all OMA push-to-talk over cellular (i.e. PoC) compliant service.

An aspect may also be applicable at a user or group level.

For each aspect, an associated set of rules or logic may be defined which outline the steps or processing required to achieve the given aspect. The logic also identifies the raw presence/data indicators/elements relevant to the calculation of the associated aspect. A given aspect may combine two or more predefined rules together as part of its logic processing. Further, underlying logic may be reused as a library or routines in support of aspects within a presence platform. This library may include aspects as other high-level modules or components which may be incorporated. This allows multiple client application types to utilize a context aware layer.

In one embodiment presence aspects are extensible. For example, if a given service or enabler requires specific functionality, the presence platform could support the extension or re-definition in one or more aspects, as required.

As will be appreciated by those skilled in the art, **Table 2** may be modified or extended to support other presence platforms or application/enabler requirements. The particular presence aspects shown in **Table 2** are demonstrative of an OMA presence platform.

**Table 2: Presence Aspects**

| **Presence Aspect** | **Description** | **Associations** | **Visibility** | **Common visibility** |
|---|---|---|---|---|
| **opt-in** | Presentity is *willing* to participate in a session for a given service or application. | Person -> service. | OTA, Server | Server |
| **Available** | Presentity is *available* to communicate using a given service or application. | Person -> service. | OTA, Server | Server |
| **contact-means** | Presentities most *applicable* method of contact for a given service or application. | Person(addr) -> service. | OTA, server | Server |
| **contactable** | Presentity is *willing, available,* and has a currently *valid* contact means for a given service or application. | Person(addr) -> service. | OTA, server | Server |
| **reachable** | Presentity is *contactable* for a given Service or application. | Person -> service -> device | OTA, server | OTA |
| | | | | |
| | NOTE: A positive indication for *reachable* indicates that a presentity is willing, available, contactable, and their device is in-coverage to establish communication over the defined service. | | | |
| **where-are-you** | Presentities current location. | Person, Person -> service -> device | OTA, server | OTA |
| **personal-avatar** | Presentities current personal iconic representation. | Person | OTA, server | OTA |
| **service-avatar** | Presentities current iconic representation for a given service or application. | Person -> service | OTA, server | OTA |
| personal-interests | Presentities current interests or hobbies. | Person(extended-info) | OTA, server | Server |
| **who-is-subscribing-to-me** | Watchers that currently have 'pending' subscriptions for a given presentity. | Winfo | OTA, server | Server |
| **who-is-nearby** | A list of zero or more presentities that are within close proximity and meet an optional set of criteria (e.g. interested in football). | Person -> service | OTA, server | Either |
| **who-is-blocked** | Watchers who have had subscriptions terminated or have been blocked for a given presentity | Winfo, common-policy | OTA, server | Server |
| **eligible-session-participant** | Whether a presentity is reachable and meets an optional set of criteria in order to participate in a session of the associated service. | Person -> service -> device, Shared UserProfile, Other XDMS meta-data | OTA, Server | Server |
| **Session-answermode** | An indicator of whether a presentity will accept an incoming session for a given service in automatic (no intervention) or manual (user must accept/reject) mode. | Person -> service | OTA, Server | OTA |

**Table 2** defines various presence/application/service aspects applicable to a presence platform. For each aspect there is a short description along with the association or applicability of the aspect to the standard presence data model. In addition, the visibility is declared. Visibility describes the applicable point at which the associate aspect is referred to. Common visibility defines or declares the most common or relevant point at which the associated aspect is likely to be referred. Choices for visibility include over the air (OTA) versus server. As would be appreciated, "server" would surface on the network side in an application server.

In the first row of **Table 2** above, the opt-in aspect is defined which indicates that the presentity is willing to participate in a given session for a given service or application. As indicated in **Table 2,** the person is associated with the service.

A second row of **Table 2** indicates that a presence aspect is 'available'. This aspect indicates that the presentity is available to communicate using a given service or application and again there is an association between the person and the service.

The next row in **Table 2** indicates the presence aspect of contact-means. A presentity's most applicable method of contact for a given service or application is provided and the association is between the person's address and the service.

The next row of **Table 2** indicates an aspect of 'contactable'. This aspect shows whether the presentity is willing, available and has currently valid contact means for a given service or application. Again, in this case, the association is between the address of a person and the service.

The next row of the table indicates an aspect of 'reachable'. This shows that the presentity is contactable for a given service or application. A positive indication for reachable shows that a presentity is willing, available, contactable and that their device is in coverage to establish communication over the defined service. The association is therefore between the person, service and the device.

'Where-are-you' is the next aspect defined in **Table 2** and shows the presentity's current location. As indicated, the association for this aspect is at the person, and the person, service, and the device.

Other aspects are further defined in **Table 2** and include various associations thereto.

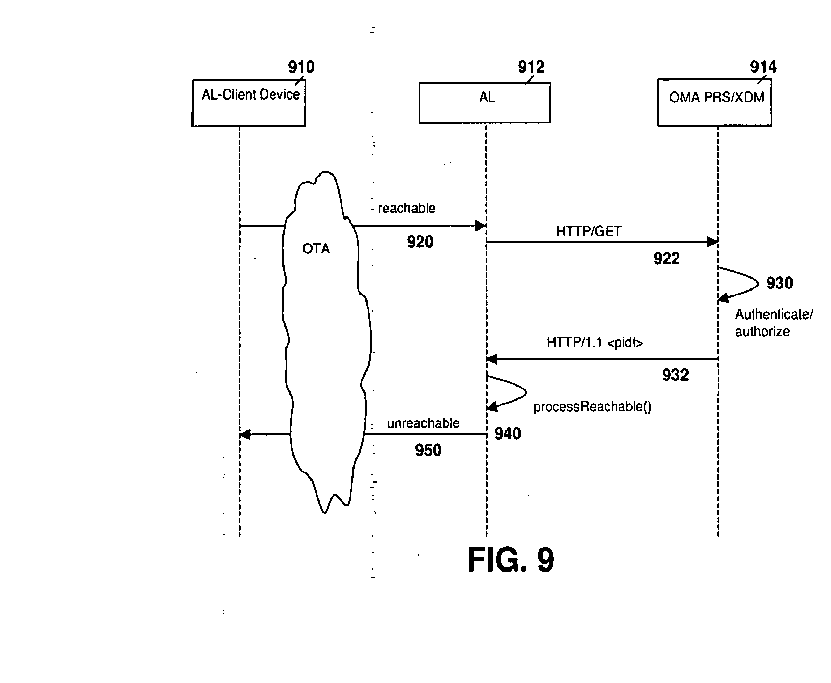

For an OMA presence realization, an example presence platform call flow may look like that shown in **Figure 9****.** Those skilled in the art will appreciate that **Figure 9** shows that the context aware layer may be configured between a client device and the OMA presence/XDM layer. In one embodiment, the access layer can be an application layer or proxy. Such a context aware layer could be a separate layer or an internal layer of the application (for example a mobile advertising application with a split or integrated context aware layer).

As shown in **Figure 9****,** the aspect "reachable" may include, in the back end, further processing which incorporates rules and possibly the use of other aspects in the computation. As previously noted, these aspects may exist within a standard library of aspects for reuse within higher level applications or service aspects when required.

Reference is now made to **Figure 9. Figure 9** shows a client device **910** which communicates with an access layer (AL) **912** (e.g., a context aware layer (CAL)), which in turn communicates with an OMA PRS/XDM entity **914.**

Client device **910** sends a query concerning the presence aspect "reachable", shown as communication **920.** In one embodiment, the aspect "reachable" may also include a URI corresponding to a presentity. In turn, access layer (AL) **912** sends an HTTP/GET request **922** to OMA PRS/XDM **914.**

OMA PRS/XDM **914** authenticates as shown by **930** and returns a response in the form of HTTP/1.1 <pidf> **932.**

The access layer (AL) **912** then checks whether the presentity is reachable as shown by arrow **940.** The processing within the AL for the aspect "reachable" invokes other rules such as "contactable", "contact-means", "available" and "opt-in or willing".

The arrow shown by **940** determines that the presentity is unreachable and returns this in message **950.**

As shown in **Figure 9** reachable query **920** and unreachable response **950** travel over the air. However, this is meant only as an example and other communications techniques would be applicable in different embodiments.

**Rules/Triggers:**

A third branch of the context awareness mechanism solution consists of rules and/or triggers. The example below uses presence as an example.

Rules reside within a presence context and establish a sequence of steps or logic flows required to compute presence aspects based on the metadata provided by the underlying presence platform. Rules are conceptually similar to database stored procedures or user defined functions (UDFs). Base or default presence rules may be changed or supplemented by an application client or an individual user. For example, the injection by a client of dynamic rules may override or extend base rule behavior. In addition, rules incorporate policies associated with the presence context by the application or the enabler to augment or provide hints surrounding the interpretation of metadata. This permits an application or service to directly affect the outcome of one or more presence aspects, as required.

**Table 3** below shows a set of rules relating to computation of presence related aspects with pseudo-logic specific to the OMA presence platform. It should be noted that this is only a subset of the rules/logic that may be exposed by a presence context. It is possible to change the composition or granularity of rules as required by the presence context. In addition, as noted with reference to **Figures 2-5** above, it is possible for a presentity or watcher to continue to fetch or be notified of raw presence information by the underlying presence platform in order to reach specific conclusions if context is not applicable. This could, as would be appreciated, occur in specific situations.

As used in **Table 3** below, 'def' indicates "defined" and means that the entity exists and is established with reasonable values, whereas 'undef' means "undefined" - the complement of 'def'. 'Undef' thus has values such as nil, null, or invalid.

'Valid' in **Table 3** below means the associated entity still contains timely or meaningful data.

**Table 3: Rules**

| **Rule** | **Description** | **Pseudo-logic** |
|---|---|---|
| **findServicePresinfo** | Return most *applicable* pres. information element 'svc' for the given service or application within service 'list'. | ■ **For each <tuple> 't' in list with t.service-id == service-id** |
| | | ○ **ltems.add('t')** |
| | | ■ **If items.size == 1** |
| | | ○ **Res=Items[0]** |
| | | ■ **Else** |
| | | ○ **Res=resolveService(Items)** |
| | NOTE: pseudo-logic method 'resolveService()' implements semantics outlined in OMA-TS-Pres V2_0 Section (5.2.3). | ■ **Return Res** |
| **hasOptedinForService** | Makes use of opt-in-source policy to establish a user 'p' *willingness* to communicate given a service or application 'svc'. Willingness is an ordered pair (open\|closed, indefiniteltime-ofs-value). | ■ **Switch (opt-in-source policy)** |
| | | ■ **Case willing:** |
| | | ○ **Uwp=undef-willingness policy** |
| | | ○ **If svc.willingness undef** |
| | | ■ **Return Uwp** |
| | | ○ **Else** |
| | | ■ **Return svc.willingness** |
| | | ■ **Case session-participation:** |
| | | ○ **Return Willingness(svc.session-participation, indefinite)** |
| | | ■ **Default: // ignore** |
| | NOTE: pseudo-logic method implements semantics outlined in OMA-TS-Pres V2_0 Section (10.4.1). | ○ **Return Willingness(open, indefinite)** |
| **isAvailable** | Return boolean value indicating whether a presentity 'p' is *available* to communicate for a given Service or applicaiton 'svc'. | ■ **Urs=undef-registration-state policy** |
| | | ■ **Ubs=undef-barring-state policy** |
| | | ■ **Uas=unavailable-activities-set policy** |
| | | ■ **If (p.activities valid and <activities> non-empty-set)** |
| | | ○ **For each <activities> 'a' in p:** |
| | | ■ **If ('a' match 1+ element in Uas)** |
| | | **Return false** |
| | NOTE: pseudo-logic method implements semantics outlined in OMA-TS-Pres V2_0 Section (10.4.3). The logic in this method also factors in activity (if directed to by policy) into availability calculation. | ■ **If (svc.reg-state undef)** |
| | | ○ **If (Urs == 'ignore')** |
| | | ■ **Reg-state=active** |
| | | ○ **Else** |
| | | ■ **Reg-state=Urs** |
| | | ■ **Else** |
| | | ○ **Reg-state=svc.reg-state** |
| | | ■ **If (svc.bar-state undef)** |
| | | ○ **If (Ubs == 'ignore')** |
| | | ■ **Bar-state=active** |
| | | ○ **Else** |
| | | ■ **Bar-state=Ubs** |
| | | ■ **Else** |
| | | ○ **Bar-state=svc.bar-state** |
| | | ■ **If (Reg-State == 'active' AND Bar-state** == **'active' AND svc.status.basic == 'open')** |
| | | ○ **Return true** |
| | | ■ **Return false** |
| **establishContactMeans** | Return applicable *contact* 'c' for a a given a service or application service 'svc'. NOTE: pseudo-logic follows rfc 3863. | ■ **Return svc.contact** |
| **iscontactable** | Return a valid ContactMeans consisting of the tuple (contact,ldev,validit it y) if a presentity 'p' is *contactable* for a given service or applicaiton'svc'. NOTE: pseudo-logic method implements semantics outlined in OMA-TS-Pres V2_0 Section (10.4). | ■ **W = hasOptedinForService(p,svc)** |
| | | ■ **If (W valid AND isAvailable(p,svc))** |
| | | ○ **C = establishContactMeans(svc)** |
| | | ○ **If (C def AND svc.devicelD def)** |
| | | ■ **Cm=ContactMeans( Contact, svc.deviceID(s), w.validity)** |
| | | ■ **Return Cm** |
| **isReachable** | Return boolean value indicating whether an applicable device 'dev' may be reached over the required network type given a contactable contact-means. | ■ **Ant=applicable-network-type policy** |
| | | ■ **If (cm valid)** |
| | | ○ **For each 'd->deviceID' in Idev:** |
| | | ■ **Find 'dev' in <device> elements where dev.deviceID == 'd->deviceID'** |
| | | ■ **If match** |
| | | ■ **For each <network> 'n' in 'dev':** |
| | | ■ **If ('n'.id match 1+ element in Ant and 'n' available)** |
| | | ■ **Return true** |
| | | ■ **Return false** |

**Table 3** above describes a number of rules. The first rule defined is 'findServicePreslnfo' which returns the most applicable presence information element for the given service or application within a service list. As indicated in the pseudo logic, for each tuple t in the list, a check is made to see whether the service-id of 't' matches the desired service-id, and if so the tuple t is added to a list. Thereafter, once the compilation is finished, if the item size is 1 then that item is returned. Otherwise the function 'resolveService' is invoked. As will be appreciated by those skilled in the art, the 'resolveService' function is an OMA specific function that finds the most relevant service.

Similar rules are defined with regard to the remainder to the **Table 3,** in which various pseudo logics are utilized to define what will be returned when a rule is implemented.

Presence rules and/or logic flows may be specified using OMA's PEEM/PEL. The following is an example of a PEEM/PEL 'abstract process' document which characterizes the logic flow for the 'findServicePresInfo' rule as shown in the pseudo-logic of **Table 3** above:

```
     <process name="findServicePresinfo"
         targetNamespace="http://example.com/ws-bp/purchase"
          xmlns="http://docs.oasis-open.org/wsbpel/2.0/process/abstract"
          xmlns:pcam="http://pcam.example.com/wsdl/oma-pres-pcam">
       <documentation xml:lang="EN">
       A WS-BPEL process for finding the appropriate service tuple(s).
      </documentation>
     <!-- Input/output parameters: -->
    <!-- presinfo - inbound body containing service-ID, and presence info -->
     <!-- theResult - the most relevant service tuple for service-ID -->
     <variables>
     <variable name="presinfo" messageType="##opaque"/>
     <variable name="matchingTupleList" messageType="##opaque"/>
      <variable name="theResult" messageType="##opaque"/>
      </variables>
     <partnerLinks>
      <partnerLink name="service" partnerLinkType="##opaque"
          partnerRole="4#opaque"/>
        <partnerLink name="customer" partnerLinkType="##opaque"
          partnerRole="##opaque"
         myRole="4#opaque"/>
     </partnerLinks>
     <sequence>
      <receive partnerLink="customer" operation="findServicePresInfoRequest"
        variable="presinfo" createlnstance="yes">
      </receive>
       <forEach counterName="i" parallel="no">
       <!-- Iterate over $presinfo.msg/tuple and find all matches -->
       <!-- between $presinfo.msg/service-id and -->
       <!-- $presinfo.msg/tuple[i]/service-description/service-id -->
       <!-- Store in matchingTupleList -->
      </forEach>
       <if>
     <condition opaque="yes">$matchingTupleList.num-items == 1 </condition>
       <flow>
        <!-- $theResult is the first item in $matchingTupleList -->
     </flow>
         <else>
        <!-- $theResult is the outcome of invoking resolveservice -->
        <!-- method with $matchingTupleList -->
      </else>
      </if>
     <reply partnerLink="service" portType="##opaque"
        operation="4#opaque" variable="theResult">
     </reply>
    </sequence>
   </process>
```

The other portion of the rules/triggers branch is triggers. Triggers reside within a presence context and associate a sequence of steps (or logic flows) based on an underlying presence state change detected in the presence platform. Triggers are conceptually similar to database triggers. Triggers are, by default, initially notifications. Triggers may be defined by an application client, or an individual user as needed. For example, the injection by a client of dynamic triggers may override or extend base trigger behavior(s).

**Table 4** lists a set of triggers relating to the computation of presence related aspects with pseudo-logic specific to the particular trigger. It should be noted that aspects may also be defined with a corresponding trigger definition.

**Table 4: Triggers**

| **Trigger** | **Description** | **Pseudo-logic** |
|---|---|---|
| **onOptin/Ou**t | Application defined trigger which is invoked when a presentity is determined to have opted-in/out for the given service or application | ■ **notification(default)** |
| **onUn/Available** | Application defined trigger which is invoked when a presentity is un/available for the given service or application. | ■ **notification (default)** |
| **onUn/Reachable** | An application defined trigger which is invoked when a presentity is un/reachable for the given service or application. | ■ **notification (default)** |
| **onNearby/onOutOfRanqe** | Invoked when a presentity is nearby or they have moved out of a specified range for the given service or applicaiton. | ■ **notification (default)** |
| **on-pendinq-subscription** | Invoked when a presentity has one or more subscriptions in a 'pending' state. | ■ **notification w/list<AOR> (default)** |
| **on-terminated-subscription** | Invoked when a presentity has one or more subscriptions in a 'terminated' state. | ■ **notification w/list<AOR> (default)** |
| **on-update-note** | When a presentity adds or updates a personal note. | ■ **notification w/note-text (default)** |
| **on-is-in/eliqible-session-participant** | When a presentity is un/reachable and in/eligible for the given service or application. | ■ **notification (default)** |

The first trigger in **Table 4** above indicates that the trigger will be invoked when a presentity opts in or out of a given service or application. The trigger allows specific functionality to be carried out when the associated state occurs within the context. The pseudo-logic can be defined by the application client if the client wishes the P/CAM to do something on the occurrence of a given event which is when a trigger is invoked.

The other triggers defined by **Table 4** have similar functionality and are invoked pursuant to a predefined condition being met.

Triggers are specified using OMA's PEEM/PEL (Policy Expression Language) and are substantially similar (in structure and composition) to presence rules. Thus the code example used above with reference to rules could be adapted for the triggers of **Table 4.**

Triggers are useful in a complex presence-aware system. Triggers provide a network initiated encapsulation to be defined and applied for a given scenario. Triggers, in one embodiment, provide a simple notification to a client or service or may incorporate complex business logic that is executed completely within the network. This is helpful within a wireless domain where network bandwidth and processing resources are limited.

For example, a wireless content delivery service may require specific behavior based on the state of users and their associated device capabilities. That is, two users who have opted in for a sports ticker/alert service with different devices may receive content in different ways. For example, a first user who has a very simple text based wireless device and is only able to receive short message service (SMS) with baseball related content and/or a web-based URL pointing to additional information requires different data than a second user who has a full featured personal digital assistant/smart phone with a built in media handling capability. The second user may receive multimedia alert messages containing short full-color video clips of a sports 'play of the day'.

Each case above illustrates the underlying complexity of a content delivery service for delivering appropriate/timely content relevant to each user's device. That is, a content delivery service typically has some understanding of a given user's current state, along with their associated interests, and the relevant device capabilities for receiving content. A content delivery service working in combination with a contextually aware presence capability is such a platform. Further, a contextually aware platform that exposes relevant "aspect triggers" on behalf of a content delivery service provides useful means for notifying or pushing relevant information to an associated subscriber base.

An aspect with an associated trigger is a "monitored aspect" on a continuous or specified basis. That is, when an entity, whether a person or a logical entity, reaches or qualifies for an associated aspect trigger, the associated trigger "fires," and a set of logics or actions takes place. The logic is contextual in nature and allows services and/or user specific actions to be defined and executed. This may be sending or pushing relevant information to an appropriate client device. As with aspects, aspect triggers may be expanded to encapsulate a variety of non-presence indicators such as location. Further, in one embodiment triggers may be established by including in an establishment message the 'duration' of the monitoring. For example, the duration may be one-shot (i.e. single change detected), indefinite (until cancelled) or for a finite period of time (e.g. for the next 3 hrs).

The present systems and methods include a mechanism for an arbitrary number of aspects as required by the service/presence platform. This may include a set of common aspect triggers such as "availability", "opt-in", "reachable", among others, as well as application specific triggers. A method exists in one embodiment within the presence platform or management interface for associating an appropriate set of aspect triggers with a given service. Association of aspect triggers is contextual in nature and may apply at different levels. For example, a given aspect trigger may apply to a service enabler such as OMA push-to-talk over cellular PoC compliant services. Further, the trigger may be applicable or scoped at a class of service level. For example, this may apply "availability" to all class of services. Further, a trigger may be applicable at a user or group level.

The determination of whether a client is "reachable" is simplified by abstracting the aspect to the context aware layer. Further, a trigger can invoke the aspect or the aspect can be invoked on behalf of the trigger. This could be done by the underlying service enabler without any involvement from any client device. Triggers may invoke defined aspects and/or may incorporate logic consisting of rules/procedures which include the invocation of other aspects.

Aspect triggers by default will send an appropriate notification back to an associated client. However, it is possible for a service, class-of-service, enabler, user or group to modify/define a trigger which performs actions exclusively within the network without any client involvement.

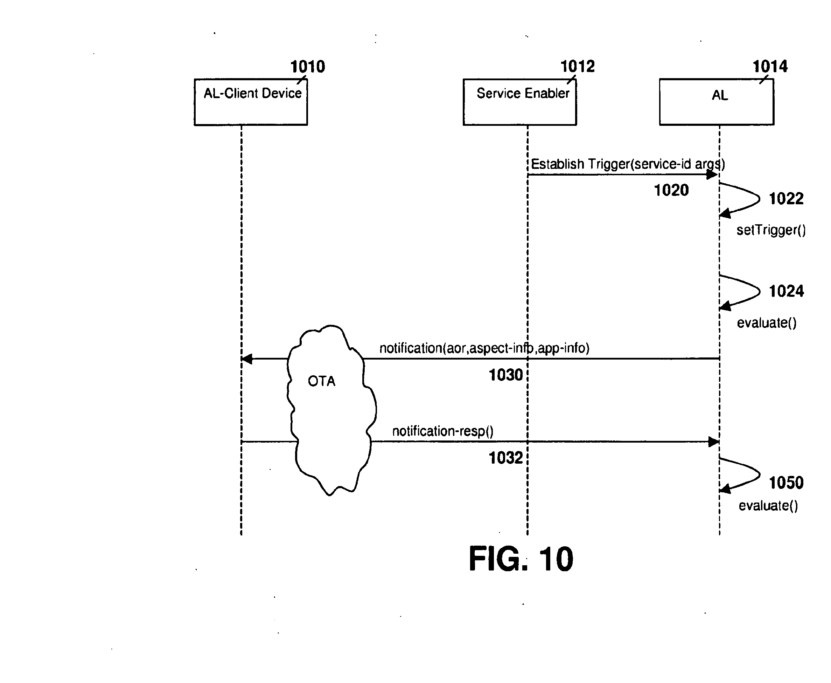

Call flow is shown below with regard to **Figure 10****.** Aspect triggers do not require an associated subscription on behalf of a client or service. Given triggers are calculated or derived within the network, an interested observer, whether a client device or interworking service/enabler, may receive an unprompted or asynchronous notification as a result of an aspect trigger. Notifications may be handled using different communication means. For example, a client device may receive an SMS notification as a result of an aspect trigger firing. Additionally other services may receive OMA SIP/PUSH 1.0 notification or notifications in response to an associated trigger.

The contents of a notification are specific to the trigger and could include items such as the address of record for one or more presentities, an aspect indicator or mask for one or more aspects of relevance, a URL, a service or application routing mask for the receiving entity to ensure the aspect is directed or associated with the appropriate observer, among others.

Each client or service receiving a notification may respond according to the associated transport protocol. Additionally, it is possible for aspect trigger indications to be durable. That is, if a trigger is calculated for a given "interested observer" but that observer is unreachable, the aspect indication may be persisted or queued until the given user is able to properly receive the associated trigger. This is useful for scenarios where a given notification may outlast a given client user session.

Referring to **Figure 10****,** a client device **1010** communicates with a service enabler **1012** which communicates, or is integrated with an aware layer (AL) **1014** (e.g., a context aware layer (CAL)).

As seen in **Figure 10****,** a trigger is established with message **1020,** at which point AL **1014** sets a trigger as shown in **1022,** and evaluates the trigger as shown by arrow in **1024**.

Arrow **1022** establishes the trigger. This may include overriding or extending default steps for the trigger, obtaining/evaluating data from various sources and possibly sending out notifications to one or more users.

The evaluation shown by arrow **1024** shows that when a trigger fires in response to a detected change in an associated aspect, an address of record, the changed aspect or application information is packaged and notification is sent to the client device or service. This notification is shown with arrow **1030.**

In some cases a response or acknowledgement may be returned, and this is shown by arrow **1032.**

As shown in **Figure** 10, the AL **1014** could then continue to monitor or evaluate whether the trigger should fire as shown by arrow **1050.**

The above policies, aspects and rules/thresholds could utilize a web services business process execution language in the form of WSBPEL 2.0. WSBPEL 2.0 provides a mechanism with which to express logical sequences required to implement presence rules or triggers (either whole or in part) in a P/CAM solution. A formal language (like PEEM/PEL) for specifying logic flows and invoking primitives (through web service description language (WSDL) type bindings) provides a presence context with limitless combinations of rules and/or triggers on behalf of an application or service. It should also be noted that more complex context flows may be created and chained together (e.g. through partner links) to carry out workflows and or business logic that is presence related and contextually relevant to the connected platform. Rules are able to invoke other rules, as nested rules. Similarly, triggers may also invoke rules where applicable. In other embodiments, expressing rules could be performed utilizing a traditional programming language (e.g. Java) or diagramming tools (e.g. a Sequence, Flow-Chart, or Use-Case diagram in UML being translated to a rule(s)).

As will be appreciated by those skilled in the art, the use of a context aware layer saves device and network resources by reducing the amount of information flowing between a mobile device and a network, and by removing processing from the mobile device.

For comparison with the present system and method, an example of information flow is shown hereafter with regard to **Figure 1****.** Specifically, when Alice wishes to send a PoC alert to Bob, the following XDM fetch could made:
**GET** /pidf-man ipulation/users/sip:bob@example.com/index/--/tuple/service-desciption/service-id=%220rg.openmobilealliance:PoC-alert%22 **HTTP/1.1**

In response, a 'raw presence document' as illustrated below is returned:

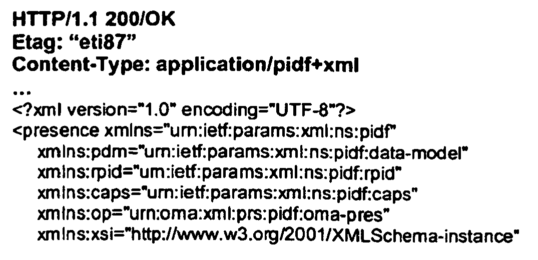

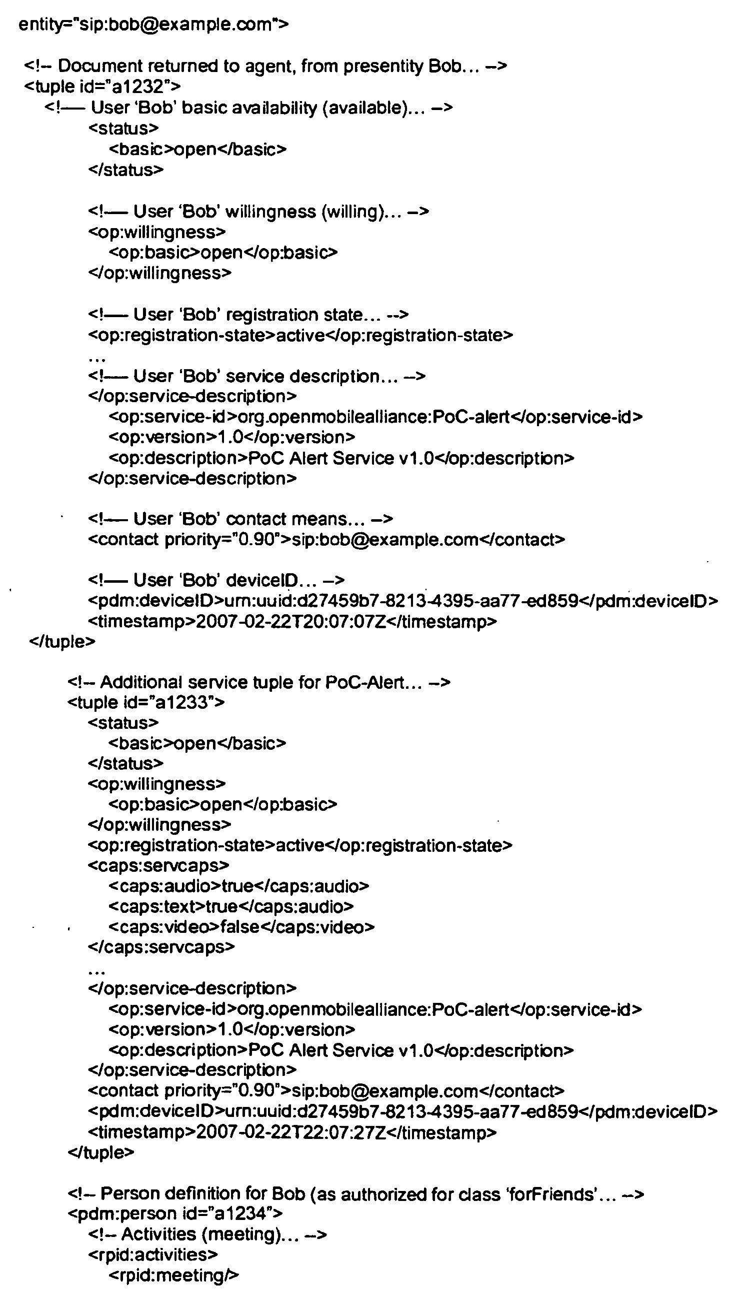

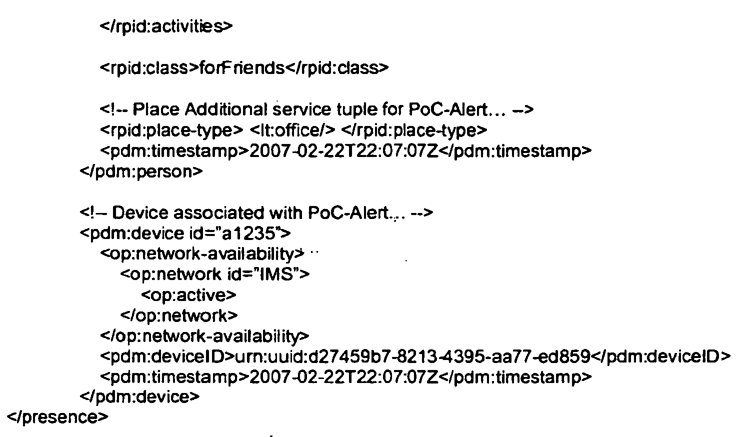

The above therefore illustrates the large (in terms of number of bytes or characters) presence document that is returned by conventional systems and methods, requiring significant battery resources to receive and network resources to transmit.

As will be appreciated by those skilled in the art, the resulting 'raw presence document' illustrated above could also be delivered by an OMA/Presence SIP:NOTIFY request (on behalf of an authorized watcher). An XDM fetch is used to simplify the network flows for this example.

Examples of where the abstraction mechanism may be used include:

**Instant messaging client**

One exemplary client application for the use of a context aware layer is an instant messaging application. The instant messaging application is called "MyFriendlyChat" herein.

In a university setting, for example, several friends may have the "MyFriendlyChat" application loaded onto their mobile device. In this example, user Alice is a university student having finished a day of classes. She is heading towards the college restaurant and wonders whether any of her friends are nearby to join her for dinner.

Alice takes out her wireless device and starts the "MyFriendlyChat" application and invokes the "Invite-nearby-friends-to-chat" function. This function utilizes both presence and location to return a list of friends that are within a predetermined distance and have a reachable status. The "MyFriendlyChat" application returns the active buddy list showing that Bob and Jane are nearby and reachable.

Alice enters a short message on her device letting her friends know that she is going to the college restaurant. Both Bob and Jane receive the message from Alice and reply that they will join her shortly.

The above shows a client application which utilizes both presence and location in order to make determinations and return relevant information to a user. In particular, the "invite-nearby-friends-to-chat" function requires knowledge of the location of nearby friends, as well as presence information to allow the instant messaging to occur.

Under a traditional model of instant messaging, a presence platform will need to be queried to obtain a list of raw data which must then be processed by the client application. Further, in this case a location platform would also be required to be queried to find the location of individuals in a buddy list.

According to the present disclosure, the aspects can be abstracted to a context aware layer that is located within the network. The context aware layer can be part of a platform such as the location and presence platform, part of a dedicated server, part of a presence or location server, or could be distributed among these entities. In some cases an agent for the context aware layer could also exist on the wireless device or on another computer.

The functionality of the client application is placed within the context aware layer thus providing for consistent results between varied client applications and also reducing signaling required between the mobile device and network.

For the above, the "MyFriendlyChat" client application functions as both a watcher and a presence source in an OMA/PRS realization and functions as a presence source in a context aware layer realization.

The context aware layer makes use of a predefined aspect to determine whether Bob and Jane can be reached. In this case, the aspect may be "eligible-session-participant" which is defined to select one or more presentities based on a given criteria. In this case, the aspect "eligible-session-participant" is overridden for application "MyFriendlyChat" to select from a group list those "buddies" who are "willing, reachable, and nearby". The overridden presence aspect is configured prior to the indication of any aspects from a "MyFriendlyChat" client executing on the wireless device.

With regard to call flows, the client application must determine who is willing, reachable, and nearby to initiate a message datagram to invite these "buddies" to dinner. To fulfill this functionality, it is assumed that the "MyFriendlyChat" application subscribes to members of Alice's buddy list through OMA PRS/RLS components.

The client application thereafter needs only to initiate communications towards eligible session participants based on the context aware layer result.

Various rules could be applied to the aspect to narrow it further. For example a limit could be placed on a subset of buddies when determining who is close by and reachable. Thus, the rule could be that only university buddies are returned when the request is made.

In a continuation of the above example, once Alice, Bob and Jane reach the restaurant, Alice could set an aspect trigger on her mobile device to alert her if any of her friends come within a certain distance of the restaurant within a predetermined time period. For example, Alice could set a trigger on her device to indicate that if any "buddies" come within 0.5 kilometers within the next half hour she should be alerted.

In this example, Jim meets these criteria and Alice receives a notification on her mobile device that Jim has entered the specified area and Alice can thus invite Jim to join the group.

As will be appreciated the above illustrates an example of an aspect trigger. Specifically, a trigger is established for the aspect "eligible-session-participant" and can be called, for example, "isEligibleSessionParticipant" which could cause an alert to be sent to Alice once true. As will be appreciated, such an alert could include an audible tone, vibration or any such notification to indicate to a user that the trigger conditions have been met.

Again, the use of a context aware layer facilitates a use of triggers, as well as reducing communications between the mobile device and the network, thereby saving battery life and processing power on the mobile device as well as network resources.

**Mobile advertising scenario**

In a further example of the above, car company XYZ Motor Cars wants an advertising campaign to coincide with the launch of a new sports-activity car model. XYZ Motor Cars hires Split-second Advertising Company to run the ad campaign and Split-second makes use of ABC Telecom as the wireless service/content delivery provider.

Split-second has established an advertising campaign for the new car model targeting individuals between 23 and 30 years of age with interests in biking, camping, kayaking. The ad contains various photos, video-clips or the like, of the new model being used with different sports activities.

Jack, Phyllis, Lynn and George have all agreed to receive advertising related content. Andrew is within the target market for XYZ Motors but has not opted to receive advertising content. Jack, Lynn and George are within the target market for XYZ Motors.

With the above scenario, ABC Advertising Company configures their wireless advertising platform for the advertising campaign. A trigger is established within the wireless advertising platform, where the trigger monitors individuals who meet the Split-second criteria for the given ad campaign, who have opted in to receive the advertising, are "reachable", and have an appropriate device with capabilities of receiving an associated video clip.

ABC turns on the campaign to coincide with the launch date of the new model for XYZ, resulting in the context aware layer trigger, defined above, firing.

A short time later, Jack, Lynn and George receive messages containing information related to the new vehicle being introduced by XYZ Motors. The ad content is adapted appropriately for each device. For example, Jack could receive a WAP-Push SMS with the WAP-URL to XYZ Motor's launch site while Lynn and George both receive multimedia messages (MMS) with a short video clip attached.

Since Phyllis and Andrew did not meet the criteria for the ad campaign, they are not contacted. However, if at a future time but still during the ad campaign, Andrew opts in to receive wireless advertising messages the XYZ Motor Company ad would be sent to Andrew.

The above is implemented utilizing various aspects. The "reachable" aspect can be used to determine whether Jack, Lynn and George can be reached to send advertising messages to. An aspect such as "opt-in" can be used to determine whether the user has opted in to receive advertising.

Triggers could also be utilized. In this case, a trigger such as "isEligibleSessionParticipant" is used to return one or more users who have opted into the wireless advertising and content delivery services, are reachable and have a device with an appropriate set of media capabilities. In this case, the default action for the aspect trigger could be to direct the context aware layer to initiate content appropriate to the user. Thus, for example, no direct over-the-air indication could be sent to an advertising application on the client device.

The context aware layer could include information such as MobileAdvertisingPreferences" defining a collection of mobile advertising specific preferences stored in an appropriate XDMS. The wireless advertising client located in the device may invoke this entity to return mobile advertising related preferences.

Other information could include "ContentDeliveryPreferences" having a collection of content-delivery preferences stored in an appropriate XDMS. The wireless advertising client or other component within the device may invoke this entity to return content-delivery/service/application/device preferences.

The advertising example provides for a context aware layer utilizing two separate enablers working together. Specifically a mobile advertising and content delivery enabler are used to achieve a specific function point. Such interactions are not possible under present services.

Research has shown that data transfer savings utilizing a context aware layer are between about 40% and about 75% under certain conditions. Thus, the use of the context aware layer provides savings of network resources and battery life on the mobile device.

The context aware layer further provides for the connection of multiple and varied client applications by allowing aspects, rules, policies and triggers to be defined at the context aware layer. This provides the advantage that the context aware layer can service multiple client applications and does not need to be recreated for each specific client application.

**Establishing a presence context for a Service:**

Having regard to the above and to the amount of data required to be transferred to subscribe to and watch a target, the present disclosure utilizes a context aware layer such as the Open Mobile Alliance presence access layer (OMA PAL) and provides for the establishment of presence context on behalf of a watcher client such as a watcher client **110** from **Figure 1** or for a watcher client grouping.

In the present disclosure, presence context is established and applied on a service basis. As known to those skilled in the art, a per service basis may be on an application level or a base level.

Thus, utilizing the context above, the context may be refined based on:
- watcher/watcher grouping
- presentity/resource/group of presentities
- combination of the above

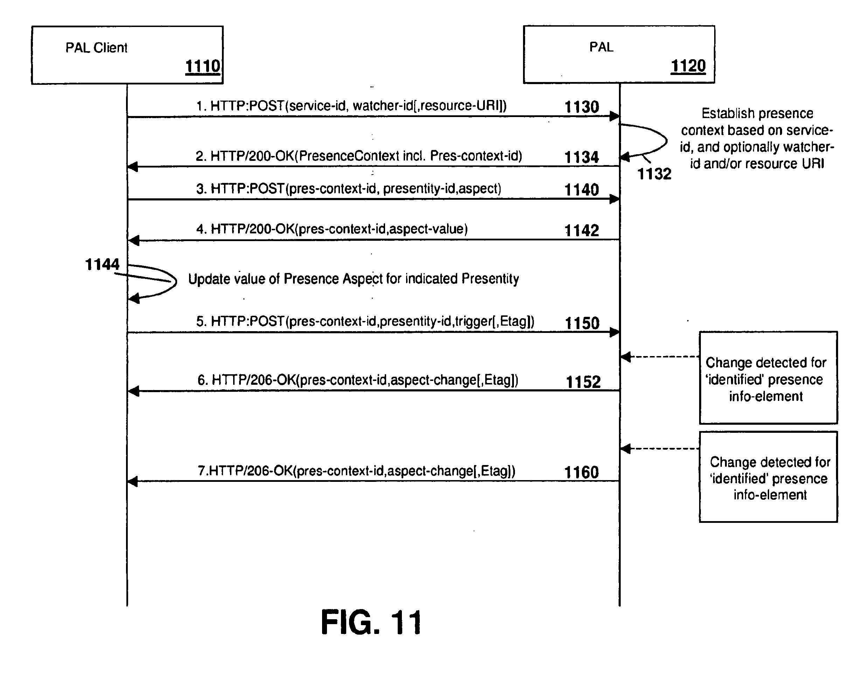

Utilizing the "MyFriendlyChat" instant messaging service from **Figure 1****,** reference is now made to **Figure 11. Figure 11** illustrates a flow between a presence access layer (PAL client **1110** and a presence access layer (PAL) in the network **1120.**

The presence context associates the needed presence information for the presence aware service based on the service or a class of service. It may also narrow presence context based on the watcher-id. Further, it is possible for the PAL, during presence context establishment, to also subscribe for one or a collection of presentities on behalf of the PAL client operating as a watcher.

In one embodiment, presence context also allows the service provider to control which information is used or sent back to the PAL Client. When a presence context is returned, a presence context identifier may also be provided to correlate the presence context with the service ID/watcher ID. A presence context may also be useful for a watcher client configured as a generic PAL-client agent operating on behalf of many different PAL capable applications. That is, the presence context may be used by a PAL client agent to distinguish one presence system from another within the watcher client. In other words, a single PAL-client may route appropriate aspect indications to a correct application or service on a device.

Referring to **Figure 11****,** an HTTP:POST message, as shown by arrow **1130,** is sent from PAL client **1110** to PAL **1120.** The HTTP:POST may have a service ID to identify the service for which the PAL client wishes to subscribe, the watcher ID for the PAL client **1410,** which may optionally be a uniform resource identifier (URI). A further optional resource URI may also be included, to identify a presentity or a buddy-list related to the watcher.

An example of the HTTP:POST is shown below with regard to the following XML:

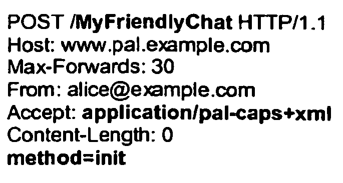

As will be appreciated by those skilled in the art, the purpose of an HTTP: POST is to identify and possibly authenticate a watcher and to initiate a PAL session. The URI referenced in the POST method is analogous to a service URI. Here the context "MyFriendlyChat" is provided by the 'path'. A PAL would typically route to this to an appropriate application context on the server hosting the platforms. In other words, in the present example it could refer to the URI for the "MyFriendlyChat" service or resource. Based on the URI the PAL **1120** knows the context for the presence information that is to be utilized by watcher client **1110.** Alternatively, the resource URI may optionally be part of the message body itself, for example as "method=init&param='bob@example.com"'.

Further, the HTTP:POST message of arrow **1130** indicates an accept-header of type "application/pal-caps+xml". This mime-type indicates the type of message body a particular watcher client is able to process. The PAL establishes presence context through a presence context resolution process. For example, it is possible that, prior to the HTTP:POST message, a service provider has provisioned a PAL Profile (a service level view of presence using a PAL) for the "MyFriendlyChat" service. Once the message of arrow 1130 is received by the PAL, the PAL establishes a presence context for a given client or requestor based on who that user is, the service, among other considerations. Presence context is created and determined when the request is made. That is, the presence context contains application presence aspects required for use with "MyFriendlyChat" clients, along with other metadata required to support this service. Examples of such metadata include a set of underlying rules used to process or calculate the presence aspects.

Once a base presence context has been established, as indicated above, the presence access layer may be refined, extended or overwritten through a subsequent presence context amendment phase. For example, a PAL may examine input fields within the initiation message to determine that there are amendments applicable to a presence context for a specific watcher or watcher group. For example, this is specified in the "From:" header (i.e. based on the watcher who initiated the request). The refinement or amendment could for example, additionally 'qualify' a presence context based on the fact that a user is a member of a special group (e.g. Alice is a member of gold-class users of MyFriendlyChat) and therefore this could change the resulting presence context that user (Alice) ultimately makes use of for the PAL session.

In one embodiment, it may be determined that a watcher is a special class of user and therefore certain rules and/or policy value instances are updated on the watcher's behalf relevant to the "MyFriendlyChat" service. This processing is shown by arrow **1132** of **Figure 11**.

In **Figure 11****,** the PAL**1120** formulates the result into a corresponding presence context response message which is carried in the body of a normal HTTP response message such as an HTTP/200-OK, shown by arrow **1134** of **Figure 11****.**

The body of the message shown by arrow **1134** is illustrated with regard to the example XML below:

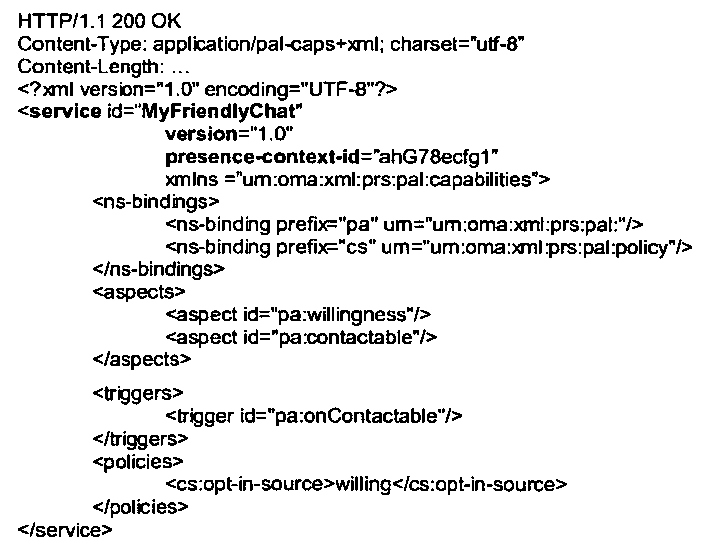

As shown in the above XML, optional payload based on what is supplied is provided in the response.

The response message above consists of a root "service" XML element which specifies the actual service identifier corresponding with the resource URI. In this case, the resource is the "MyFriendlyChat" service. The "version attribute" identifies the version such as a major or minor of the service corresponding with the service identifier. The presence context therefore refers to version 1.0 of the "MyFriendlyChat" service in the above exemplary XML.

In a further embodiment, the attribute "presence-context-ID" is established by the presence access layer service to correlate a watcher ID such as a PAL client **1110** session with a PAL for a given service ID and possibly a presentity. The presence-context-ID is incorporated within any follow-on request message or messages to a PAL by the watcher/PAL client **1110.**

While the exemplary XML may be sufficient to establish a PAL enabled service, in order to clarify information which could be made available to a PAL client **1110,** it is also possible to specify an optional message payload within the service XML element. Thus, the PAL client **1110** may request the information within a specific message request forwarded to the PAL **1120.** This information can be useful, for example, when a watcher is a trusted service within the service provider's domain.

In one embodiment, the response message shown by arrow **1134** contains details of presence context. That is, the message body enumerates the presence aspects/triggers and policy types/values resolved or established for the given presence context. This enables a watcher to determine the granular details of a presence context previous established by a service provider. The watcher can further use these details to refine its internal functionality to make use of alternate or new requests towards the PAL. Such functionality is similar to JAVA reflection (i.e. the ability to self-inspect interfaces at runtime).

In a further embodiment, it is also possible for the PAL to respond with an 'HTTP/1.0 401 Authorization' status message. Such a status message is similar to what is currently carried by OMA SIMPLE presence. This would require the watcher to authenticate to the PAL such as through the use of a digital access authentication mechanism over HTTP (e.g. HTTP digest authentication).

Following any authentication or initial handshake, a watcher or watcher grouping may request one or more aspect values related to one or more presentities including a group list URI. In other words, the resource URI may relate to a buddy list for the watcher.

The request for the values may be made in a HTTP:POST message as shown by arrow **1140.** Exemplary XML that may be part of the message of arrow **1140** is shown below:

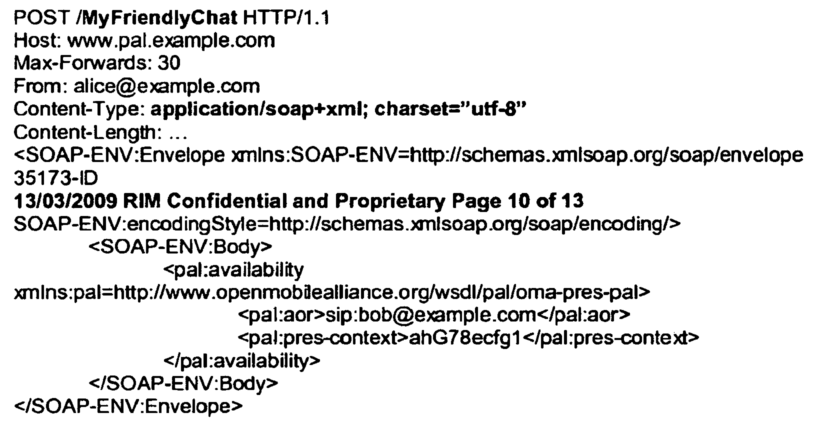

In the XML above, the presentity is "Bob" and the presence context is identified as a series of XML Element values.

In response, an HTTP/200-OK message, shown by arrow **1142,** is returned. Exemplary XML for the message as shown by arrow **1142** is provided below:

```
     HTTP/1.1 200 OK
    Connection: close
    Content-Type: application/soap+xm charset="utf-8"
     <SOAP-ENV:Envelope xrnlns:SOAP-ENV=http://schemas.xmlsoap.org/soap/envelope
    SOAP-ENV:encodingStyle=http://schemas.xmlsoap.org/soap/encoding/>
          <SOAP-ENV:Body>
                 <pal:availabilityResp
     xmlns:pal=http://www.openmobilealliance.org/wsd//pal/oma-pres-pal>
                     <pal:result>available</pal:result>
                </pal:availabilityResp>
          </SOAP-ENV:Body>
    </SOAP-ENV:Envelope>
```

In the above XML, "Bob" is available. The PAL client **1110** has now updated aspect values for the given presentity "Bob" as shown by arrow **1144.**

In a further embodiment, it is also possible for the PAL client **1110** to asynchronously receive trigger notifications based on detected presence watcher aspect changes in the network that is relevant to the service "MyFriendlyChat". Thus, PAL client **1110** need only issue an initial request towards the PAL **1120** to initiate a trigger event stream.

Referring to **Figure 11****,** the HTTP: POST message, shown by message **1150,** is sent to the PAL **1120** and a trigger is provided. In the message shown by arrow **1150,** the ETag is an optional HTTP Header field which may permit a PAL Client to optionally (if supported) specify an ETag relating to the last receipt of PAL info they received. This would provide a 'hint' to the PAL on where the PAL Client is, currently in terms of it's local (cached) copy of state.

An exemplary message for arrow **1150** is illustrated with the XML below:

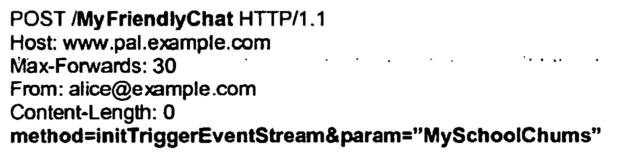

The request invokes the PAL to establish presence trigger monitoring on behalf of watcher "Alice". "Alice" has added an optional parameter specifying a group URI to include as part of an event stream request. This is defined as "MySchoolChums". Utilizing this mechanism, the PAL may receive an indication and narrow the set of presentities to be monitored relative to the service "MyFriendlyChat".

At some point in the future, the PAL detects the presence aspect change related to a member of the group "MySchoolChums". The updated aspect value is sent towards the PAL client **1110** as HTTP/206-OK message, shown by arrow **1152.**

The response may be provided as the following XML:

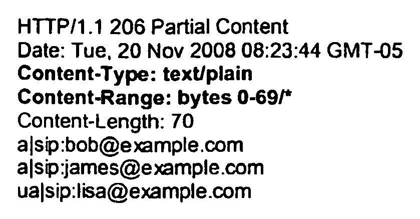

The above XML indicates that the PAL **1120** has detected presence aspect changes for three presentities within the group URI "MySchoolChums". These are identified as "Bob", "James", and "Lisa". "Bob" and "James" have become available while "Lisa" has become unavailable in the exemplary XML above.

As will be appreciated by those skilled in the art, the reporting of a presence aspect trigger is specific to the presence context established in the messages shown by arrows **1130** and **1132** and a PAL client **1110** will never receive indications of triggers that are not relevant to the established presence context. For example, in the above the presence context relates directly to the service "MyFriendlyChat".

Future changes would then be detected in this embodiment, and could be reported in an HTTP/206-OK message such as that shown by arrow **1160.** The XML for arrow 1160 is similar to that of the XML for arrow **1152.**

In one embodiment, the PAL call flow may further be optimized. As shown with regard to arrow **1132,** it is possible to include a resource URI of a presentity or a group of presentities. This may be used to directly establish a trigger event stream, which would initiate the presence trigger monitoring process within the PAL. This would therefore eliminate one or more of the messages indicated by arrows **1134, 1142** and **1150.**

Therefore, a watcher would simply receive indications as series of HTTP:POST response messages (presentities indicated by the resource URI) are detected to change applicable presence aspects for the context. The PAL **1120** could even deliver, (as part of a first HTTP/206 response) an initial notification which would provide a watcher a baseline presence view.

It is also further possible to eliminate the optional step of returning details of presence context as shown by arrow **1134.**

In a further embodiment, PAL context establishment, the messages of arrow **1140** and **1142** are optional and are provided for illustrative purposes. It is possible for a watcher or watcher group to initiate the trigger events stream and await the presence trigger indications related to one or more presentities, as shown by arrows **1150, 1152** and **1160.**

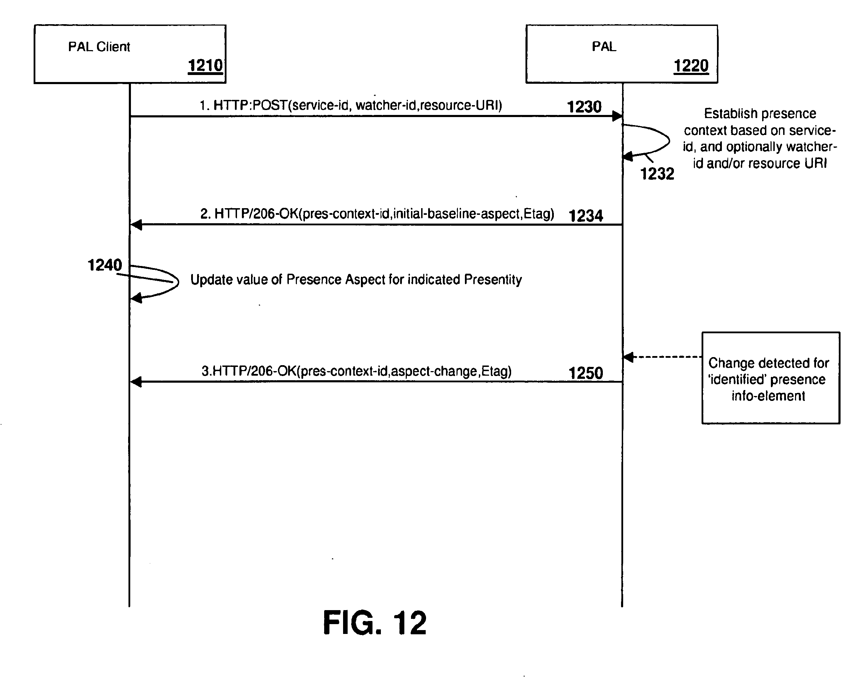

An alternative embodiment for the PAL presence context environment is shown with a substantially optimized call flow with regard to **Figure 12****.** In **Figure 12****,** PAL client **1210** communicates with PAL **1220.** An HTTP:POST could send the service ID, watcher ID and the resource URI as described above. This is shown by arrow **1230.**

At arrow **1232** the presence context based on the service ID and optionally the watcher ID and resource URI is established and in response the HTTP/206 response is sent to the PAL client **1210.** The HTTP/206 response is shown by arrow **1234.**

The HTTP/206-OK provides the status of the presentities that the watcher is watching and thus the PAL client **1210** updates the values for the presence aspects for the indicated presentities as shown by arrow **1240.** Subsequently, when a change is detected for an identified presence information element, the HTTP/206-OK message **1250** is sent from PAL **1220** to PAL client **1210** providing the changes.

As will be appreciated by those in the art, the establishment and communication of presence context may be carried out using transport protocol other than HTTP. For example the SIP protocol could be used to develop a similar call flow. That is, assuming a SIP session initiation method that permits non-media types "SIP:INVITE" or non "SIP:SUBSCRIBE" sessions to be directed towards another user/agent, it is possible for a PAL presence context instance to be established. Following this SIP session establishment, existing SIP:MESSAGE datagrams may be used in either direction to mirror the HTTP based call flows outlined in messages **1140, 1142, 1150, 1152** and **1160** of **Figure 11****.**

In an alternative embodiment, it is also possible for the establishment of presence context to occur without a presence access layer altogether. For example, a presence service itself could establish an applicable presence context based on a service identifier or other meta-information such as a watcher ID, presentity or resource URI, among others. The establishment of the presence context could be achieved, for example, using a specific type of SIP:SUBSCRIBE method between a watcher client and/or watcher agent and a presence platform such as the OMA Presence SIMPLE platform. In a similar manner to PAL, the presence service could directly take on the responsibility of establishing an applicable presence context and could therefore implicitly tune or refine the notification mechanism on a watchers behalf.

The above therefore illustrates a means by which a watcher or a watcher group can associate applicable presence information for a particular service with further enhancement or narrowing based on who the watcher is and possibly the resource they wish to function with. The use of the mechanism saves data from being transmitted over a network, thereby saving network resources and battery life on a mobile device.

Further, the mechanism provided above is also capable of initiating subscription relative to a given service, as a part of the establishment of a presence context by a watcher over the air. This is due to the PAL being able to utilize the messages and indication of a trigger event stream and to immediately begin notifying. The benefit of this is the elimination of the requirement for costly presence subscriptions and the chattiness of the presence SIMPLE protocol. The presence context may be used to establish both the initial presence state indications and succinct and easy to consume manner and eliminates the requirement to perform subsequent subscription requests to narrow the delivery of presence information to satisfy subsequent information deltas.

Advantages of utilizing the service context include limiting messaging that is required, thus saving network resources and possibly battery life on a mobile device. A watcher client does not need to overtly tell the presence service or presence aware layer what is relevant, nor will a subscription be required for each target presentity.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method comprising:
establishing (844, 1132, 1232) a context based on a request message (830, 1130, 1230) that includes a service identifier associated with a service, the context comprising at least one aspect, an aspect being a logical abstraction relating to one or more underlying presence or location information elements, the context further comprising one or more of rules, policy types and policy values used to calculate a value of said aspect, such that the context provides a view of presence or location for the service; and
sending (850, 1134, 1234), to a watcher or context-aware client or agent (1110, 1210), a response message specifying a context identifier and an enumeration of the context.

2. The method of claim 1, wherein the request message further includes a resource identifier used to identify a presentity or buddy-list.

3. The method of claim 2, wherein the resource identifier is a group identifier utilized to narrow a set of target individuals for whom a watcher receives information.

4. The method of any one of claims 1 to 3, wherein the enumeration includes at least one of rules, aspects, triggers, policy types or policy values for the context.

5. The method of any one of claims 1 to 4, wherein the request message is a SIP protocol message or a hypertext transfer Protocol, HTTP, POST message.

6. The method of any one of claims 1 to 5, wherein the response message is a SIP protocol message, a hypertext transfer protocol HTTP/200-OK message, or a hypertext transfer protocol HTTP/206-OK message.

7. The method of any one of claims 1 to 6, wherein the context fulfills underlying functionality for a single application or for a group of applications associated with the service.

8. The method of any one of claims 1 to 7, further comprising refining the context based on one or more of an identity of a watcher, group membership of a watcher, information within the context establishment request and the service.

9. A server comprising a processor configured to perform the method of any one of claims 1 to 8.

10. A computer-readable medium storing instructions which, when executed by a processor, cause performance of the method of any one of claims 1 to 8.

## Patentansprüche

1. Ein Verfahren, das aufweist:
Herstellen (844, 1132, 1232) eines Kontexts basierend auf einer Anforderungsnachricht (830, 1130, 1230), die einen Dienstidentifizierer umfasst, der mit einem Dienst assoziiert ist, wobei der Kontext zumindest einen Aspekt aufweist, wobei ein Aspekt eine logische Abstraktion ist, die ein oder mehrere zugrundeliegende(s) Präsenz- oder Positionsinformationselement(e) betrifft, wobei der Kontext weiter eine oder mehrere Regel(n), Richtlinientyp(en) und Richtlinienwert(e) aufweist, die verwendet werden zum Berechnen eines Werts des Aspekts derart, dass der Kontext eine Ansicht einer Präsenz oder Position für den Dienst vorsieht; und
Senden (850, 1134, 1234), an einen Beobachter oder Kontext-bewussten Client oder Agent (1110, 1210), einer Antwortnachricht, die einen Kontextidentifizierer und eine Aufzählung des Kontexts spezifiziert.

2. Das Verfahren gemäß Anspruch 1, wobei die Anforderungsnachricht weiter einen Ressourcen-Identifizierer umfasst, der zum Identifizieren einer Präsentität oder Freunde-Liste verwendet wird.

3. Das Verfahren gemäß Anspruch 2, wobei der Ressourcen-Identifizierer ein Gruppen-Identifizierer ist, der verwendet wird, um einen Satz von Zielpersonen einzugrenzen, für die ein Beobachter Information empfängt.

4. Das Verfahren gemäß einem der Ansprüche 1 bis 3, wobei die Aufzählung zumindest eines aus Regeln, Aspekten, Auslösern, Richtlinientypen oder Richtlinienwerten für den Kontext umfasst.

5. Das Verfahren gemäß einem der Ansprüche 1 bis 4, wobei die Anforderungsnachricht eine SIP-Protokoll-Nachricht oder eine HTTP(hypertext transfer protocol)-POST-Nachricht ist.

6. Das Verfahren gemäß einem der Ansprüche 1 bis 5, wobei die Antwortnachricht eine SIP-Protokoll-Nachricht, eine HTTP(hypertext transfer protocol)/200-OK-Nachricht oder eine HTTP/206-OK-Nachricht ist.

7. Das Verfahren gemäß einem der Ansprüche 1 bis 6, wobei der Kontext eine zugrundeliegende Funktionalität für eine einzelne Anwendung oder für eine Gruppe von Anwendungen erfüllt, die mit dem Dienst assoziiert ist.

8. Das Verfahren gemäß einem der Ansprüche 1 bis 7, das weiter aufweist ein Verfeinern des Kontexts basierend auf einem oder mehreren aus einer Identität eines Beobachters, einer Gruppenmitgliedschaft eines Beobachters, einer Information in der Kontext-Herstellungs-Anforderung und den Dienst.

9. Ein Server, der einen Prozessor aufweist, der konfiguriert ist zum Durchführen des Verfahrens gemäß einem der Ansprüche 1 bis 8.

10. Ein computerlesbares Medium, das Anweisungen speichert, die bei Ausführung durch einen Prozessor eine Ausführung des Verfahrens gemäß einem der Ansprüche 1 bis 8 veranlassen.

## Revendications

1. Procédé comprenant le fait :
d'établir (844, 1132, 1232) un contexte sur la base d'un message de demande (830, 1130, 1230) qui comporte un identifiant de service associé à un service, le contexte comprenant au moins un aspect, un aspect étant une abstraction logique se rapportant à un ou plusieurs éléments d'information de présence ou d'emplacement sous-jacents, le contexte comprenant en outre un ou plusieurs éléments parmi des règles, des types de politiques et des valeurs de politiques utilisés pour calculer une valeur dudit aspect, de sorte que le contexte fournisse une vue de présence ou d'emplacement pour le service ; et
d'envoyer (850, 1134, 1234), à un observateur ou à un client ou agent sensible au contexte (1110, 1210), un message de réponse spécifiant un identifiant de contexte et une énumération du contexte.

2. Procédé de la revendication 1, dans lequel le message de demande comporte en outre un identifiant de ressource utilisé pour identifier une entité de présence ou une liste d'amis.

3. Procédé de la revendication 2, dans lequel l'identifiant de ressource est un identifiant de groupe utilisé pour réduire un ensemble d'individus cibles pour lesquels un observateur reçoit des informations.

4. Procédé de l'une quelconque des revendications 1 à 3, dans lequel l'énumération comporte au moins l'un de règles, d'aspects, de déclencheurs, de types de politiques ou de valeurs de politiques pour le contexte.

5. Procédé de l'une quelconque des revendications 1 à 4, dans lequel le message de demande est un message de protocole SIP ou un message POST de protocole de transfert hypertexte, HTTP.

6. Procédé de l'une quelconque des revendications 1 à 5, dans lequel le message de réponse est un message de protocole SIP, un message de protocole de transfert hypertexte HTTP/200-OK, ou un message de protocole de transfert hypertexte HTTP/206-OK.

7. Procédé de l'une quelconque des revendications 1 à 6, dans lequel le contexte satisfait à une fonctionnalité sous-jacente pour une seule application ou pour un groupe d'applications associée(s) au service.

8. Procédé de l'une quelconque des revendications 1 à 7, comprenant en outre l'étape consistant à affiner le contexte sur la base d'un ou plusieurs éléments parmi une identité d'un observateur, une appartenance au groupe d'un observateur, d'informations dans la demande d'établissement de contexte et le service.

9. Serveur comprenant un processeur configuré pour mettre en oeuvre le procédé de l'une quelconque des revendications 1 à 8.

10. Support lisible par ordinateur stockant des instructions qui, lorsqu'elles sont exécutées par un processeur, entraînent la mise en oeuvre du procédé selon l'une quelconque des revendications 1 à 8.
